# EUROPEAN PATENT SPECIFICATION

(11) **EP 4 310 583 B1**
(45) Date of publication and mention of the grant of the patent: **27.05.2026**
(21) Application number: 23211301.9
(22) Date of filing: 14.06.2017
(51) Int. Cl.: G02F 1/15, A01M 29/06, C01B 25/30, C01D 15/10, C03C 17/23, C09K 9/02, G02F 1/01

(54) **INTEGRATION OF ELECTROCHROMIC FILMS ON A SUBSTRATE**
INTEGRATION VON ELEKTROCHROMEN FILMEN AUF EINEM SUBSTRAT
INTÉGRATION DE FILMS ÉLECTROCHROMIQUES SUR UN SUBSTRAT

(30) Priority: 14.06.2016 US 201662349841 P; 06.01.2017 US 201715399852
(43) Date of publication of application: 24.01.2024
(62) Divisional of application: 17814025.7
(73) Proprietor: Furcifer Inc., Fremont, CA 94538 (US)
(72) Inventor: WANG, Jian, Fremont, 94536 (US); ZHOU, Yan, Fremont, 94025 (US)
(74) Representative: Marks & Clerk LLP

(56) References cited:
- US-A- 5 825 526
- US-A1- 2007 153 355
- US-A1- 2014 327 950

## Description

### FIELD OF THE INVENTION

The invention generally relates to methods for the integration of electrochromic films, which comprise a solid state electrolyte disposed therein, on a substrate, and the resulting systems/structures.

### BACKGROUND

Electrochromism generally refers to a reversible change in optical properties of a material upon application of a potential. In particular, electrochromic materials exhibit a reversible color change due to an electrochemical reduction-oxidation (redox) reaction caused by application of an electric field.

Electrochromic materials are useful for a variety of applications, including photovoltaic devices, field effect transistors, organic light emitting diodes, general printed electronics, anti-glare window and display systems, etc. For applications involving smart window technology, the electrochromic materials need to be integrated with a glass substrate (e.g., a glass window) to become serviceable.

There is a thus a need to develop new and/or improved structures integrating electrochromic materials with desired substrates (e.g., glass). Likewise, there is also a need to develop new and/or improved methods of integrating electrochromic materials with a desired substrate that involve cost effective, efficient, and reproducible processes.

US2007/0153355 describes an electrochromic film demonstrating the electrochromic effect of a single film substrate. The electrochromic film can be attached to the surface of an object using an adhesive layer.

US2014/0327950 describes an electrochromic optical system comprising an optical substrate and an electrochromic stack disposed on the optical substrate.

US5825526 describes a tape comprising an electronically conductive flexible substrate, a release layer and an adhesive.

### BRIEF SUMMARY

The present disclosure provides unique methods for the integration of flexible electrochromic films comprising a solid state electrolyte disposed therein onto a desired substrate (e.g., a glass window). The present disclosure additionally describes the unique systems/structures formed via such methods.

According to an aspect of the present invention there is provided a double-glazing structure comprising a first panel comprising a first surface and a second surface opposite of the first surface, a second panel comprising a third surface and a fourth surface, the third surface of the second panel facing the second surface of the first panel, and a laminated structure disposed inside the first panel or the second panel. The laminated structure comprises an electrochromic film, a first adhesive interlayer interposed between the electrochromic film and a first substrate, and a second adhesive interlayer interposed between the electrochromic film and a second substrate. The structure further comprises a low-emissivity coating disposed between the first panel and the second panel, and a spacer disposed between the first panel and the second panel.

According to a further aspect of the present invention there is provided a method of forming a double-glazing structure, comprising forming a first panel having a first surface and a second surface opposite of the first surface, forming a second panel having a third surface and a fourth surface, the third surface of the second panel facing the second surface of the first panel, and disposing a laminated structure inside the first panel on the second surface or inside the second panel on the third surface, The laminated structure comprises an electrochromic film, a first adhesive interlayer interposed between the electrochromic film and a first substrate, and a second adhesive interlayer interposed between the electrochromic film and a second substrate. The method further comprises disposing a low-emissivity coating on the second surface of the first panel or the third surface of the second panel, and disposing a spacer between the first panel and the second panel.

Other objects, features and advantages of the described embodiments will become apparent to those skilled in the art from the following detailed description. It is to be understood, however, that the detailed description and specific examples, while indicating exemplary embodiments of the present invention, are given by way of illustration and not limitation. Many changes and modifications within the scope of the present invention may be made without departing therefrom, and the invention includes all such modifications.

### BRIEF DESCRIPTION OF THE DRAWINGS

Preferred and non-limiting embodiments of the invention may be more readily understood by referring to the accompanying drawings in which:
FIG. **1** is a flowchart of a method for laminating an electrochromic film on a substrate, where the electrochromic film comprises a solid state electrolyte disposed therein, according to one exemplary embodiment.
FIG. **2** is a simplified schematic of a substrate on which an electrochromic film is directly laminated, where the electrochromic film comprises a solid state electrolyte disposed therein, according to one exemplary embodiment.
FIG. **3** is a flowchart of a method for interposing an electrochromic film within a laminated structure, where the electrochromic film comprises a solid state electrolyte disposed therein, according to one exemplary embodiment.
FIG. **4** is a simplified schematic of a laminated structure, according to one exemplary embodiment.
FIG. **5** is a simplified schematic of a laminated structure having an electrochromic film disposed therein, where the electrochromic film comprises a solid state electrolyte disposed therein, according to one exemplary embodiment.
FIG. **6** is a flowchart of a method for forming a module comprising a laminated structure with an electrochromic film, where the electrochromic film comprises a solid state electrolyte disposed therein, according to one exemplary embodiment.
FIG. **7** is a simplified schematic of a module comprising a laminated structure with an electrochromic film disposed therein, where the electrochromic film comprises a solid state electrolyte disposed therein, according to one exemplary embodiment.
FIG. **8** is a simplified schematic of an exterior window structure having the module of FIG. **7** integrated therewith, according to one exemplary embodiment.
FIG. **9** is a simplified schematic of a double glazing structure having two panels and a low-emissivity coating deposited on at least one surface of at least one of the panels, according to one exemplary embodiment.
FIGS. **10A-10F** are cross sectional views of a double glazing low-emissivity structure having two panels, at least one of which comprises a laminated structure having an electrochromic film disposed therein, where the electrochromic film comprises a solid state electrolyte disposed therein, according to various exemplary embodiments.
FIGS. **11A-11H** illustrate cross-sectional views of a double glazing low-emissivity structure having two panel, at least one of which comprises a laminated structure having an electrochromic film disposed therein, where the electrochromic film comprises a solid state electrolyte disposed therein, according to various exemplary embodiments.
FIG. **12** is a simplified schematic of a double glazing low emissivity structure having at least three panels in spaced relation with each other, where at least one of the panels comprises an electrochromic film associated therewith, where the electrochromic film comprises a solid state electrolyte disposed therein, according to one exemplary embodiment.
FIG. **13** is a simplified schematic of an electrochromic film comprising a solid state electrolyte disposed therein, according to one exemplary embodiment.
FIG. **14** is a simplified schematic of an electrochromic film directly laminated on a glass substrate, where the electrochromic film comprises a solid state electrolyte disposed therein, according to one exemplary embodiment.
FIG. **15** is simplified schematic of a laminated glass structure with an electrochromic film disposed therein, where the electrochromic film comprises a solid state electrolyte disposed therein, according to one exemplary embodiment.
FIGS. **16A-16B** are simplified schematics of a smart window module in a transparent state and an opaque state, respectively, where the smart window module comprises a laminated glass structure with an electrochromic film disposed therein, and where the electrochromic film comprises a solid state electrolyte disposed therein.

### DETAILED DESCRIPTION OF THE PREFERRED EMBODIMENTS

In the following description, certain specific details are set forth in order to provide a thorough understanding of various embodiments of the invention. However, one skilled in the art will understand that the invention may be practiced without these details. Moreover, while various embodiments of the invention are disclosed herein, many adaptations and modifications may be made within the scope of the invention in accordance with the common general knowledge of those skilled in this art. Such modifications include the substitution of known equivalents for any aspect of the invention in order to achieve the same result in substantially the same way.

Unless the context requires otherwise, throughout the present specification and claims, the word "comprise" and variations thereof, such as, "comprises" and "comprising" are to be construed in an open, inclusive sense, that is as "including, but not limited to." Recitation of numeric ranges of values throughout the specification is intended to serve as a shorthand notation of referring individually to each separate value falling within the range inclusive of the values defining the range, and each separate value is incorporated in the specification as it were individually recited herein. Additionally, the singular forms "a," "an" and "the" include plural referents unless the context clearly dictates otherwise.

Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment, but may be in some instances. Furthermore, the particular features, structures, or characteristics may be combined in any suitable manner in one or more embodiments.

### Lamination of an electrochromic film on a substrate

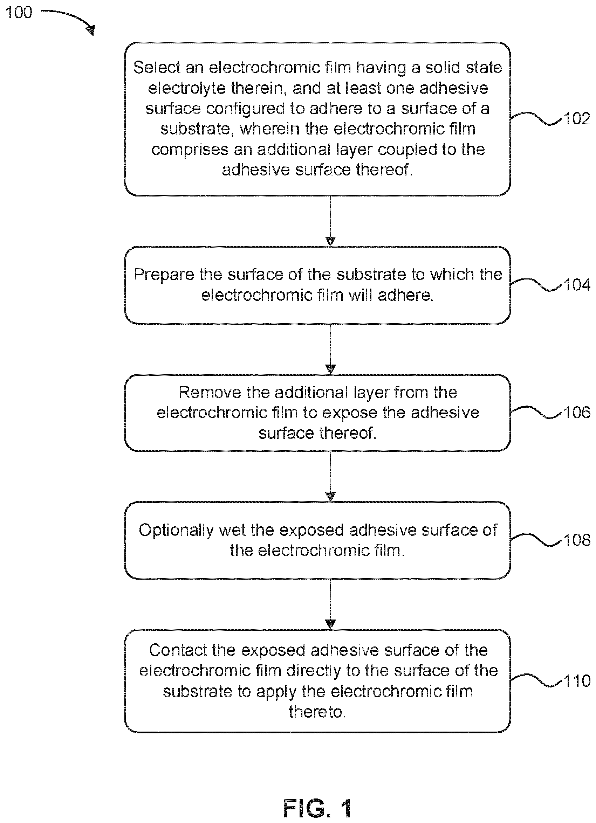

FIG. **1** illustrates a flowchart of a method **100** for laminating an electrochromic film on a substrate, where the electrochromic film comprises a solid state electrolyte therein, according to one exemplary embodiment. The method **100** may be implemented to construct any of the structures/components/devices described herein, such as those described with reference to other embodiments and/or FIGS. The method **100** may be carried out in any desired environment, and may include more or less steps than those described and/or illustrated in FIG. **1****.**

As shown in FIG. **1****,** the method **100** may include selecting an electrochromic film having a solid state electrolyte disposed therein (included within/inside the electrochromic film), and at least one adhesive surface configured to adhere to a surface of a substrate. See step **102.** The electrochromic film may also include an additional layer, e.g., a liner, coupled to the adhesive surface thereof. This additional layer coupled to, and covering at least a portion, a majority, or preferably an entirety of the adhesive surface of the electrochromic film, may help prevent the electrochromic film from adhering to undesired/unintended surfaces, as well as prematurely adhering to the desired/intended surface of the substrate.

Selection of the electrochromic film may include first measuring the substrate to determine the dimensions thereof, and selecting and/or fabricating an electrochromic film with at least one dimension equivalent and/or substantially complementary to the corresponding dimensions of the substrate. In certain embodiments, the dimensions (e.g., width, height, etc.) of the selected electrochromic film may be about equal to the corresponding dimensions of the substrate such that the electrochromic film, when adhered to the substrate surface, may cover the entirety thereof. In certain embodiments, at least one of the dimensions (e.g., width, height, etc.) of the selected electrochromic film may be less than the corresponding dimension(s) of the substrate such that the electrochromic film, when adhered to the substrate surface, may cover less than an entirety thereof (e.g., only a portion of the substrate surface). In certain embodiments, at least one of the dimensions (e.g., width, height, etc.) of the selected electrochromic film may be greater than the corresponding dimension(s) of the substrate such that the electrochromic film, when adhered to the substrate surface, may not only cover the entirety thereof, but also have one or more portions that overhang (extend beyond) the perimeter of the substrate surface. In such embodiments where at least one of the dimensions (e.g., width, height, etc.) of the selected electrochromic film are greater than the corresponding dimension(s) of the substrate, additional processing steps may be required to remove the overhanging portion(s) of the electrochromic film (the portion(s) of the electrochromic film not adhered to the substrate's surface).

In certain embodiments, the substrate may comprise a transparent material. In one embodiment, the substrate may be a transparent glass substrate. In a particular embodiment, the substrate may be a transparent glass window.

In some embodiments, the substrate may comprise a rigid (non-pliant) material; a semi-rigid (semi-pliant) material; a pliant/flexible material, and combinations thereof. A flexible substrate may be beneficial in terms of weight, ease of transportation, etc., in certain embodiments.

In various embodiments, the surface of the substrate to which the electrochromic film will adhere may be substantially flat, comprise one or more curved portions, or have any desired configuration/shape/dimensions as would be appreciated by skilled artisans upon reading the present disclosure.

As also shown in FIG. **1****,** the method **100** includes preparation of the surface of the substrate to which the electrochromic film will adhere. See step **104.** In some embodiments, such preparation may include cleaning the substrate surface via one or more processes as would be appreciated by skilled artisans upon reading the present disclosure. As used herein, the term "adhere" refers to the state in which two surfaces are held, bonded, or otherwise coupled together.

The method **100** further includes removing the additional layer from the electrochromic film to expose the adhesive surface thereof. See step **106.** After removal of the additional layer from the electrochromic film, the method **100** may optionally include wetting (e.g., applying a predetermined amount of a fluid, such as water or an aqueous fluid) the exposed adhesive surface. See step **108.**

As additionally shown in FIG. **1****,** the method **100** includes contacting the exposed adhesive surface of the electrochromic film to the substrate surface, thereby laminating/adhering the electrochromic film to the substrate surface. See step **110.** In preferred embodiments, the method **100** results in laminating/adhering the electrochromic film directly on the substrate surface.

While not shown in FIG. **1****,** the method **100** may include one or more processing steps, including, but not limited to, applying pressure to the electrochromic film laminated on the substrate, wetting the electrochromic film (e.g., via a squeegee) laminated on the substrate, and subsequently drying the electrochromic film laminated on the substrate, etc.

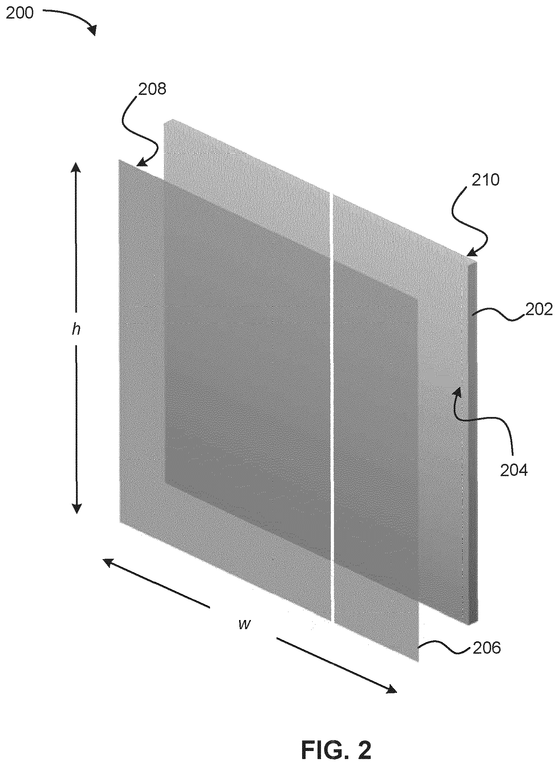

A simplified schematic of a structure comprising an electrochromic film laminated directly on a substrate is shown in FIG. **2****,** according to one exemplary embodiment. For clarity purposes only, the various components of the structure (e.g., the electrochromic film and substrate) are shown spaced apart. Moreover, while not shown in FIG. **2****,** the electrochromic film may comprise a solid state electrolyte disposed therein.

As shown in FIG. **2****,** the structure **200** comprises a substrate **202** (e.g., glass) having a first surface **204** to which the electrochromic film **206** adheres. The electrochromic film **206** has an adhesive surface **208,** which is coupled to an additional layer (not shown in FIG. **2**) prior to lamination with the substrate **202.** As indicated above, laminating /adhering the electrochromic film **206** to the first surface **204** of the substrate **202** may include at least the steps of removing the additional layer coupled to the adhesive surface **208** of the electrochromic film **206,** and contacting the adhesive surface **208** directly to the first surface **204** of the substrate **202.**

As shown in the embodiment of FIG. **2****,** the substrate **202** and the electrochromic film **206** have about an equal width, w, relative to one another, as well as about an equal height, *h*, relative to one another.

In certain embodiments the electrochromic film **206** may be applied and adhered to the first surface **204** of the substrate **202,** or a second surface (e.g., surface **210**) of the substrate **202.** For instance, in embodiments where the substrate **202** may be a glass window, such as a glass window in a building, car, aircraft, etc., the surfaces **204, 210** may correspond to an interior surface and an exterior surface of the window, respectively.

In some embodiments, the electrochromic film **206** may be applied and adhered to the first surface **204** of the substrate **202,** and at least a second electrochromic film may be applied and adhered to at least one other surface of the substrate **202.**

### Interposition of an electrochromic film within a laminated structure

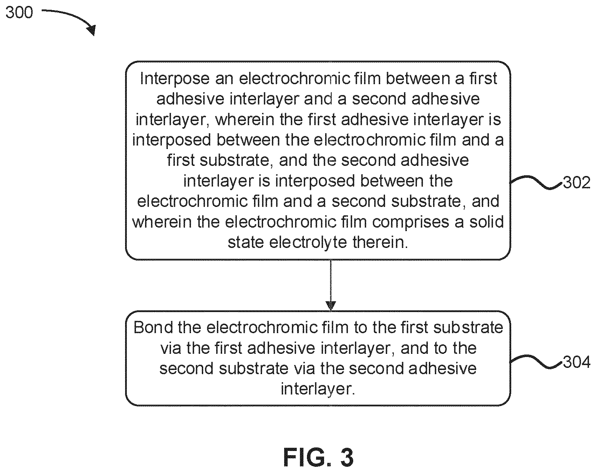

FIG. **3** illustrates a flowchart of a method **300** for interposing an electrochromic film within a laminated structure, where the electrochromic film comprises a solid state electrolyte disposed therein, according to one exemplary embodiment. The method **300** may be implemented to construct any of the structures/components/devices described herein, such as those described with reference to other embodiments and/or FIGS. The method **300** may be carried out in any desired environment, and may include more or less steps than those described and/or illustrated in FIG. **3****.**

As shown in FIG. **3****,** the method **300** includes interposing (e.g., sandwiching) an electrochromic film between a first adhesive interlayer and a second adhesive interlayer. The first adhesive interlayer is interposed between the electrochromic film and a first substrate, and the second adhesive interlayer is interposed between the electrochromic film and a second substrate. See step **302.** As indicated above, the electrochromic film may comprise a solid state electrolyte disposed therein in some embodiments.

In certain embodiments, the first adhesive interlayer and/or the second adhesive interlayer may include a material configured to bond the electrochromic film thereto. For instance, in one embodiment, the first adhesive interlayer and/or the second adhesive interlayer may include a polymeric material, particularly a thermosetting polymer material. Suitable thermoset polymer materials may include, but are not limited to, polyvinyl butyral (PVB), ethylene-vinyl acetate (EVA), polyurethanes, etc.

In certain embodiments, the first adhesive interlayer and/or the second adhesive interlayer may comprise a material that not only is configured to bond the electrochromic film thereto, but is also transparent.

In certain embodiments, the first substrate and/or the second substrate may comprise a transparent material. In one embodiment, the first substrate and/or the second substrate may be transparent glass. In a particular embodiment, the first substrate and/or the second substrate may be a transparent glass window.

In some embodiments, the first substrate and/or the second substrate may comprise a rigid (non-pliant) material; a semi-rigid (semi-pliant) material; a pliant/flexible material, and combinations thereof.

In certain embodiments, the surface of the first substrate to which the first adhesive interlayer will bond may be substantially flat, comprise one or more curved portions, or have any desired configuration/shape/dimensions as would be appreciated by skilled artisans upon reading the present disclosure. In certain embodiments, the surface of the second substrate to which the second adhesive interlayer will bond may be substantially flat, comprise one or more curved portions, or have any desired configuration/shape/dimensions as would be appreciated by skilled artisans upon reading the present disclosure.

In certain embodiments, the corresponding dimensions (e.g., width, height, etc.) of one or more of: the first adhesive interlayer, the second adhesive interlayer, the electrochromic film, the first substrate, and the second substrate, may be about equal to one another. In one embodiment, the corresponding dimensions of each of: the first adhesive interlayer, the second adhesive interlayer, the electrochromic film, the first substrate, and the second substrate, may be about equal to one another.

As also shown in FIG. **3****,** the method **300** includes bonding the electrochromic film to the first substrate via the first adhesive interlayer, and bonding the electrochromic film to the second substrate via the second adhesive interlayer. See step **302.**

In certain embodiments where the first adhesive interlayer and/or the second adhesive interlayer comprises a thermosetting polymer material, the bonding step may involve applying heat and/or pressure and/or UV irradiation to cross-link the electrochromic film with the first and second substrates.

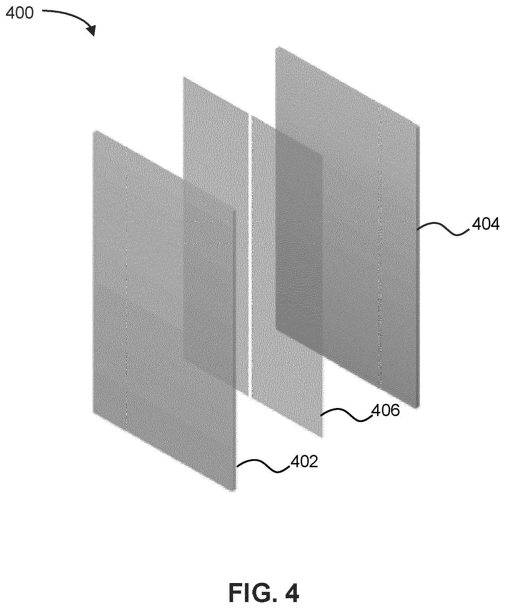

A simplified schematic of an exemplary laminated structure without an electrochromic film therein is shown in FIG. **4****,** according to one exemplary embodiment. For clarity purposes only, the various components of the laminated structure (e.g., substrates, and adhesive interlayers) are shown spaced apart.

As shown in FIG. **4****,** the laminated structure **400** is constructed in a manner that allows the structure **400** to stay together when shattered/broken, thereby providing safety protection. For instance, the laminated structure **400** comprises at least two substrates **402, 404** (e.g., each comprising glass) bonded together via an adhesive interlayer **406.** The adhesive interlayer **406** is particularly configured to keep the substrates **402, 404** bonded together even when shattered/broken, where the high strength of the adhesive interlayer **406** prevents the substrates **402, 404** from breaking up into large, sharp pieces.

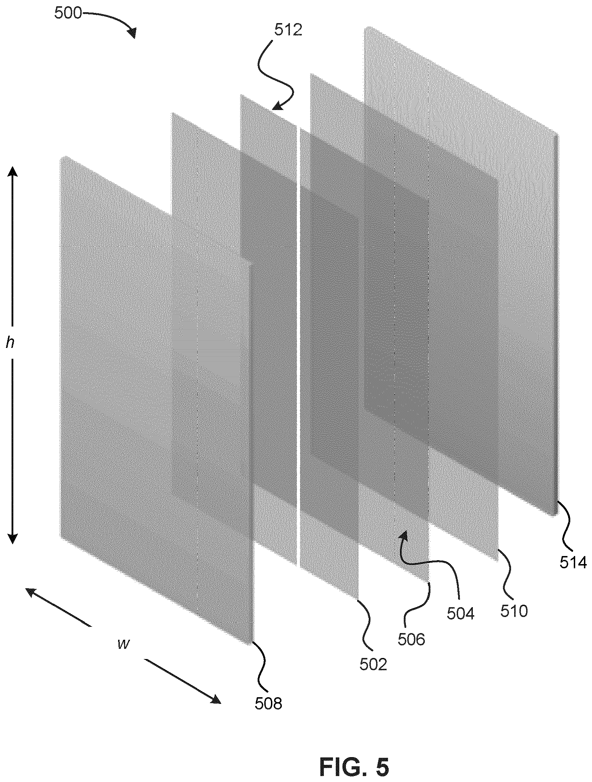

A simplified schematic of a laminated structure with an electrochromic film interposed therein is shown in FIG. **5****,** according to one exemplary embodiment. For clarity purposes only, the various components of the laminated structure (e.g., substrates, adhesive layers, and electrochromic film) are shown spaced apart. Moreover, while not shown in FIG. **5****,** the electrochromic film may comprise a solid state electrolyte disposed therein.

As shown in FIG. **5****,** the laminated structure **500** includes a first adhesive interlayer **502** interposed between a first surface **504** of an electrochromic film **506** and a first substrate **508.** The laminated structure **500** also includes a second adhesive interlayer **510** interposed between a second surface **512** of the electrochromic film **506** and a second substrate **514.** As seen in the embodiment of FIG. **5****,** the first and second surfaces **504, 512** correspond to opposing surfaces of the electrochromic film **506.**

As indicated previously, the first and/or second adhesive interlayers **502, 510** may include a material (e.g., a thermosetting polymer material) configured to securely bond (e.g., cross-link) the electrochromic film **506** with the first and second substrates **508, 514.** As such, the first and/or second adhesive interlayers **502, 510** are configured to keep the laminated structure **500** together even when shattered/broken, and prevent the laminated structure **500** from breaking up into large, sharp pieces.

As shown in the embodiment of FIG. **5****,** the first substrate **508,** the first adhesive interlayer **502,** the electrochromic film **506,** the second adhesive interlayer **510,** and the second substrate **514** may each have about an equal width, *w*, as one another, as well as about an equal height, *h*, as one another; however, this need not be the case in other embodiments.

In certain embodiments, the laminated structure **500** may be suitable for use as an exterior window of a car, building, aircraft, etc. in certain embodiments. In some embodiments, such a laminated structure **500** may be suitable for use as a curtain wall.

### Forming a module comprising an electrochromic film disposed within a laminated structure

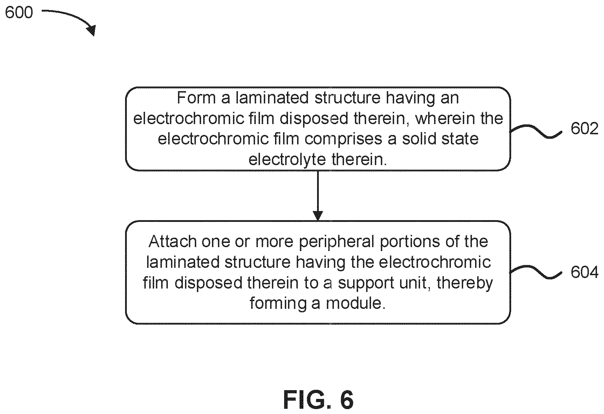

FIG. **6** illustrates a flowchart of a method **600** for forming a module comprising a laminated structure with an electrochromic film disposed therein, where the electrochromic film comprises a solid state electrolyte disposed therein (i.e., the solid state electrolyte is disposed/incorporated within/inside the electrochromic film), according to one exemplary embodiment. The method **600** may be implemented to construct any of the structures/components/devices described herein, such as those described with reference to other embodiments and/or FIGS. The method **600** may be carried out in any desired environment, and may include more or less steps than those described and/or illustrated in FIG. **6****.**

As shown in FIG. **6****,** the method **600** includes forming a laminated structure having an electrochromic film disposed therein, wherein the electrochromic film comprises a solid state electrolyte disposed therein. See step **602.** In certain embodiments, formation of such a laminated structure may proceed according to the method **300** described in FIG. **3****.** For instance, formation of such a laminated structure may include: (i) interposing an electrochromic film between a first adhesive interlayer and second adhesive interlayer, the first adhesive interlayer being interposed between the electrochromic film and a first substrate, and the second adhesive interlayer being interposed between the electrochromic film and a second substrate; and (ii) bonding the electrochromic film to the first substrate via the first adhesive interlayer, and to the second substrate via the second adhesive interlayer.

In certain embodiments, the first adhesive interlayer and/or the second adhesive interlayers may include a polymeric material, particularly a thermosetting polymer material (e.g., PVB, EVA, polyurethanes, etc.), configured to bond the electrochromic film to the first and second substrates. In certain embodiments, the first adhesive interlayer and/or the second adhesive interlayer may comprise a material that not only is configured to bond the electrochromic film to the first and second substrates, but is also transparent.

In certain embodiments where the first adhesive interlayer and/or the second adhesive interlayer comprises a thermosetting polymer material, the bonding step may involve applying heat and/or pressure and/or UV irradiation to cross-link the electrochromic film with the first and second substrates.

In certain embodiments, the first substrate and/or the second substrate may comprise a transparent material. In one embodiment, the first substrate and/or the second substrate may be transparent glass. In particular embodiments, the first substrate and/or the second substrate may be a transparent glass window.

In some embodiments, the first substrate and/or the second substrate may comprise a rigid (non-pliant) material; a semi-rigid (semi-pliant) material; a pliant/flexible material, and combinations thereof.

In certain embodiments, the surface of the first substrate to which the first adhesive interlayer will bond may be substantially flat, comprise one or more curved portions, or have any desired configuration/shape/dimensions as would be appreciated by skilled artisans upon reading the present disclosure. In certain embodiments, the surface of the substrate to which the second adhesive interlayer will bond may be substantially flat, comprise one or more curved portions, or have any desired configuration/shape/dimensions as would be appreciated by skilled artisans upon reading the present disclosure.

In certain embodiments, the corresponding dimensions (e.g., width, height, etc.) of one or more of: the first adhesive interlayer, the second adhesive interlayer, the electrochromic film, the first substrate, and the second substrate, may be about equal to one another. In one embodiment, the corresponding dimensions of each of: the first adhesive interlayer, the second adhesive interlayer, the electrochromic film, the first substrate, and the second substrate, may be about equal to one another.

As further shown in FIG. **6****,** the method **600** includes attaching one or more peripheral portions of the laminated structure having the electrochromic film disposed therein to a support unit, thereby forming a module. See step **604.** In certain embodiments, the one or more peripheral portions of the laminated structure having the electrochromic film disposed therein may attach to an inner region of the support unit. Such attachment may be achieved by way of adhesives, rubber gaskets, or other suitable fastening device/structure as would be appreciated by skilled artisans upon reading the present disclosure.

In certain embodiments, the support unit may be a frame (e.g., a window frame). In some embodiments, one or more electronic components configured to control operation of the electrochromic film may be disposed within the support unit (e.g., within at least one wall of the support unit).

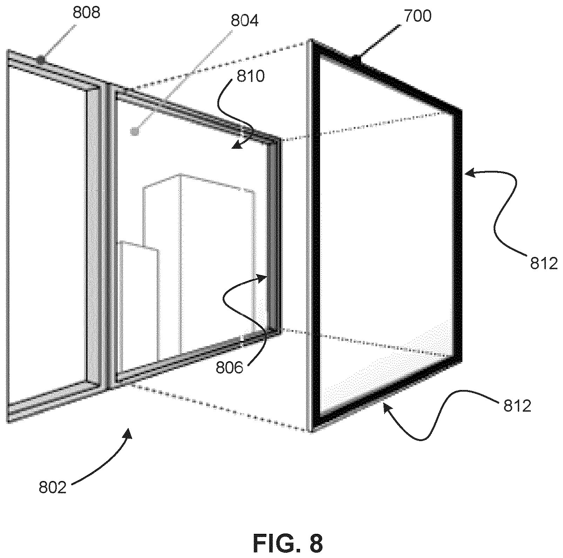

In certain embodiments, the resulting module having the electronic component(s) associated therewith may be commercially available to an end user, and used for a variety of applications. For example, an end user may install the resulting module having the electronic component(s) associated therewith as an interior window, e.g. as described in FIG. **8****.**

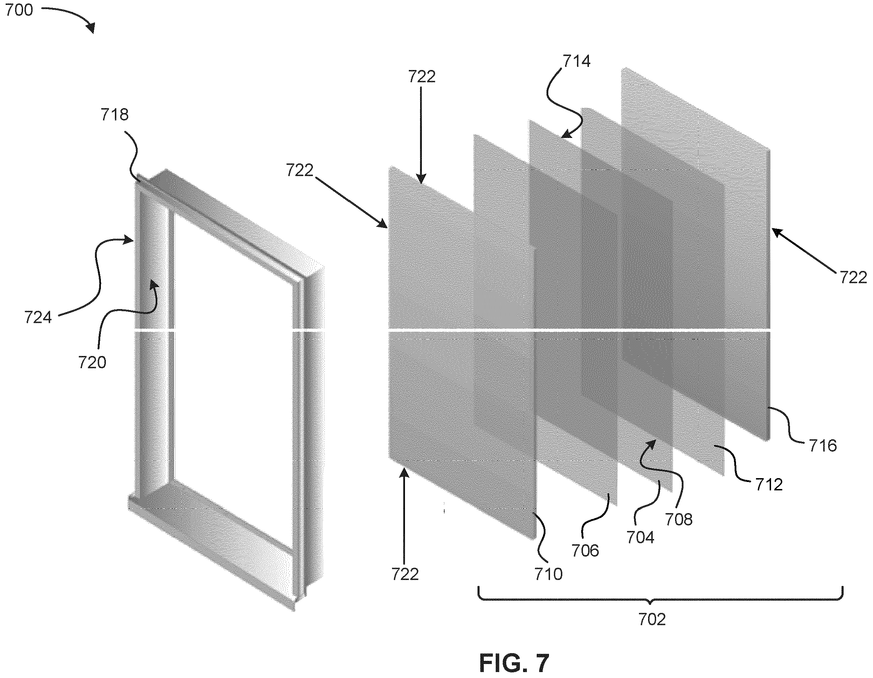

A simplified schematic of a module (e.g., a smart window module) comprising an electrochromic film disposed within a laminated structure is shown in FIG. **7****,** according to one exemplary embodiment. For clarity purposes only, the various components of the module (e.g., support unit, substrates, adhesive interlayers, and electrochromic film) are shown spaced apart. Moreover, while not shown in FIG. **7****,** the electrochromic film comprises a solid state disposed therein.

As shown in FIG. **7****,** the module **700** includes a laminated structure **702** with an electrochromic film **704** disposed therein. This laminated structure **702** particularly includes a first adhesive interlayer **706** interposed between a first surface **708** of the electrochromic film **704** and a first substrate **710.** The laminated structure **702** also includes a second adhesive interlayer **712** interposed between a second surface **714** of the electrochromic film **704** and a second substrate **716.** As seen in the embodiment of FIG. **7****,** the first and second surfaces **708, 714** correspond to opposing surfaces of the electrochromic film **704.** In certain embodiments, the laminated structure **702** may be formed according to the method **300** of FIG. **3****,** and have a similar, or the same, configuration and/or composition of the structure **500** of FIG. **5****.**

The first and/or second adhesive interlayers **706, 712** of FIG. 7 may include a material (e.g., a thermosetting polymer material) configured to securely bond (e.g., cross-link) the electrochromic film **704** with the first and second substrates **710, 716.** As such, the first and/or second adhesive interlayers **706, 712** are configured to keep the laminated structure **702** together even when shattered/broken, and prevent the laminated structure **702** from breaking up into large, sharp pieces.

As additionally shown in the embodiment of FIG. **7****,** the first substrate **710,** the first adhesive interlayer **706,** the electrochromic film **704,** the second adhesive interlayer **712,** and the second substrate **716** may each have about an equal width as one another, as well as about an equal height as one another; however, this need not be the case in other embodiments.

As further shown in FIG. **7****,** the module **700** includes a support unit **718** (e.g., a frame) having an interior region **720.** The interior region **720** of the support unit **718** may be configured to fasten/attach/secure one or more peripheral portions **722** of the laminated structure **702,** thereby producing the complete module **700.** As discussed above, one or more electrical components configured to control operation of the electrochromic film **704** may be disposed within the support unit **718,** e.g., disposed in an area located between the interior region **720** and an exterior region **724** of the support unit **718.**

A simplified schematic of the module **700** of FIG. 7 installed as an interior window of an exterior window structure is shown in FIG. **8****,** according to one exemplary embodiment. For clarity purposes only, the various components of FIG. **8** (e.g., exterior window, module, etc.) are shown spaced apart.

As shown in FIG. **8****,** an exterior window structure **802** may include an exterior window **804,** the peripheral portions of which are attached/secured to an inner region **806** of an exterior window frame **808.** As further shown in FIG. **8****,** the module **700** may be positioned adjacent to, in spaced relation with, in contact with, etc., the inner surface **810** of the exterior window **804.** One or more peripheral portions **812** of the module **700** may also be attached/secured to the interior region **806** of the exterior window frame **808.**

### Integration of an electrochromic film into a structure comprising low-e glass

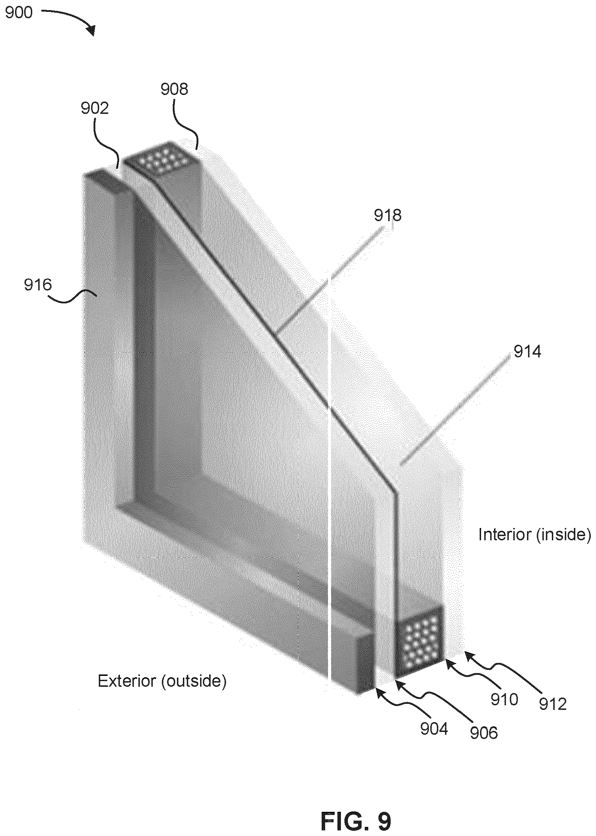

Low-emissivity ("low-e") glass is a type of energy-efficient glass designed to reduce heat transfer between the environments located on either side thereof (e.g., between the interior of a room and the outside/outdoors). Window glass is highly thermally emissive by nature. Accordingly, to improve thermal insulation and solar optical control, specific thin-film coatings are deposited on the glass surface. Low-e coatings have been developed to minimize the amount of ultraviolet and infrared light that can pass through glass without compromising the amount of visible light that is transmitted. The low-e coating is a microscopically thin, transparent coating, which reflects long-wave infrared energy (or heat). Some low-e coatings also reflect significant amounts of short-wave solar infrared energy. To protect the low-e coating, an insulated double glazing structure may be utilized as shown in FIG. **9****,** according to one exemplary embodiment.

As shown in FIG. **9****,** the double glazing structure **900** includes a first panel **902** having a first surface **904** and second surface **906.** Per the exemplary embodiment of FIG. **9****,** the first surface **904** of the first panel **902** faces towards, and is in contact with, an exterior environment (e.g., the outside), thus the first panel **902** may also be referred to as the exterior panel. In certain embodiments, the first panel **902** may comprise a transparent substrate, such as transparent glass. In various embodiments, the first panel **902** may comprise a rigid (non-pliant) material; a semi-rigid (semi-pliant) material; a pliant/flexible material, and combinations thereof.

The double glazing structure **900** additionally includes a second panel **908** in parallel, spaced relation with the first panel **902.** The second panel **908** includes a third surface **910** and a fourth surface **912.** Per the exemplary embodiment of FIG. **9****,** the fourth surface **912** of the second panel **902** faces towards, and is in contact with, an interior environment (e.g., the interior of a room), thus the second panel **908** may also be referred to as the interior panel. The third surface **910** of the second panel **908** faces toward the second surface **906** of the first panel **902.** In certain embodiments, the second panel **908** may comprise a transparent substrate, such as transparent glass. In various embodiments, the second panel **908** may comprise a rigid (non-pliant) material; a semi-rigid (semi-pliant) material; a pliant/flexible material, and combinations thereof.

A spacer **914** may be positioned between the first and second panels **902, 908.** The spacer **914** may include a polymer material, an insulating material, or other material suitable to separate panels in a double glazing structure as would be appreciated by skilled artisans upon reading the present disclosure.

The double glazing structure **900** may also include one or more support units **916** configured to secure/attach the first panel **902,** the second panel **908,** the spacer **914,** and/or other components of the structure **900.**

A low-e coating **918** may be deposited on one more surfaces of the first and/or second panels **902, 908** of the double glazing structure **900.** In the exemplary embodiment of FIG. **9****,** a low-e coating **918** is deposited on the second surface **906** of the first panel **902.** However, the position of the low e-coating **918** is not limited to the second surface **906** of the first panel **902.** For instance, in some embodiments, a low e-coating **918** may be deposited on the third surface **910** of the second panel **908.** In additional embodiments, a first low-coating **918** may be deposited on the second surface **906** of the first panel **902,** and a second low-e coating **918** may be deposited on the third surface **910** of the second panel **908.**

In some embodiments, the low-e coating **918** may be a sputtered multilayer coating comprising metals, metals oxides, and/or metal nitrides. In one embodiment, at least one of the layers of such a sputtered multilayer coating may comprise silver. In some embodiments, the low-e coating **918** may be a pyrolytic coating comprising one or more metal oxides (e.g., SnO₂).

In embodiments where the double glazing structure **900** comprises at least two low-e coatings **918,** the coatings may have the same or different composition, optical properties, dimensions, etc. as one another.

As discussed in greater detail below, the double glazing structure **900** may comprise an electrochromic film (not shown in FIG. **9**) deposited on one or more surfaces of the first and/or second panels **902, 908** (e.g., the first surface **904,** the second surface **906,** the third surface **910** and/or the fourth surface **912**), in some embodiments. This electrochromic film preferably comprises a solid state electrolyte disposed therein. In additional embodiments, the first panel **902** and/or the second panel **908** of the double glazing structure **900** may comprise a laminated structure having an electrochromic film therein. In more embodiments, the double glazing structure **900** may include an electrochromic film positioned between the first and second panels **902, 908,** where the first panel **902,** the electrochromic film, and the second panel **908** are in spaced relation with each other (i.e., the first panel **902,** the electrochromic film, and the second panel **908** do not come into physical contact with one another).

### A. Double glazing structure in which at least one panel includes a laminated structure with an electrochromic film therein

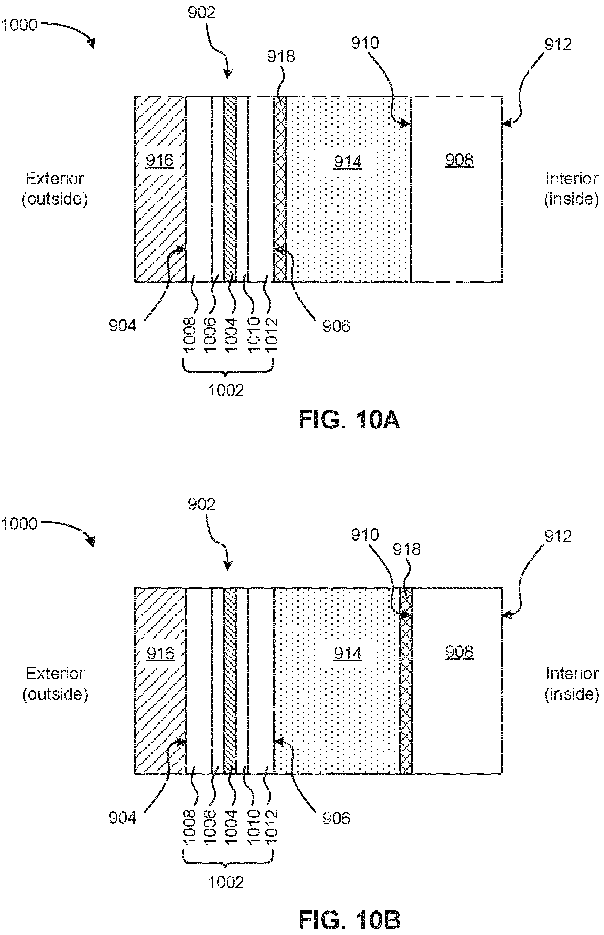

FIGS. **10A-10F** illustrate cross-sectional views of a double glazing structure **1000** in which at least one of the panels includes a laminated structure with an electrochromic film disposed therein, and where the electrochromic film comprises a solid state electrolyte disposed therein, according to various exemplary embodiments. The double glazing structure **1000** of FIGS. **10A-10F** may be implemented in combination with other devices/features/components described herein, such as those described with reference to other embodiments. The double glazing structure **1000** may also be used in various applications and/or in permutations, which may or may not be noted in the illustrative embodiments/aspects described herein. For instance, the double glazing structure **1000** may include more or less features/components than those shown in FIGS. **10A-10F****,** in some embodiments. Additionally, unless otherwise specified, one or more components of the double glazing structure **1000** may be of conventional material, design, and/or fabricated using known techniques, as would be appreciated by skilled artisans upon reading the present disclosure.

The double glazing structure **1000** of FIGS. **10A-10F** is directed to an exemplary variation of the double glazing structure **900** of FIG. **9****,** and thus may have common numbering therewith. For instance, as shown in FIGS. **10A-10F****,** the double glazing structure **1000** includes: a first panel **902** having first and second surfaces **904, 906;** a second panel **908** having third and fourth surfaces **910, 912;** a spacer **914** separating the first and second panels **902, 908;** one or more support units **916** configured to secure/attach one or more components of the structure **1000;** and a low-e coating **918** deposited on at least one surface of at least one panel.

Referring first to the embodiment of FIG. **10A****,** the double glazing structure **1000** includes the first panel **902** and the second panel **908,** where the first panel **902** has a laminated structure **1002** with an electrochromic film **1004** therein. The laminated structure **1002** comprises a first adhesive interlayer **1006** interposed between the electrochromic film **1004** and a first substrate **1008,** and a second adhesive interlayer **1010** interposed between the electrochromic film **1004** and a second substrate **1012.** In certain embodiments, this laminated structure **1002** may be formed according to the method **300** of FIG. **3****,** and have a similar, or the same, configuration and/or composition of the structure **500** of FIG. **5****.** Additionally, the electrochromic film **1004** may comprise a solid state electrolyte disposed therein, in some embodiments.

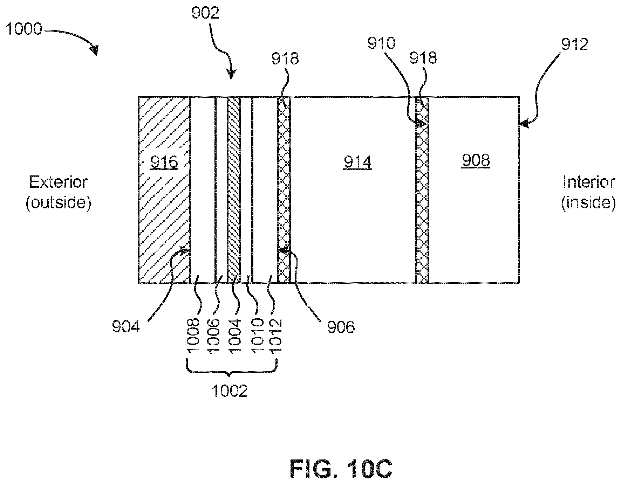

As also shown in the embodiment of FIG. **10A****,** the low-e coating **918** may be deposited on the second surface **906** of the first panel **902,** which coincides with the inwardly facing surface of the second substrate **1012.** However, in another exemplary embodiment, the low-e coating **918** may be deposited on the third surface **910** of the second panel **908,** as shown in FIG. **10B****.** In still another exemplary embodiment, a first low-e coating **918** may be deposited on the second surface **906** of the first panel **902,** and a second low-e coating **918** may be deposited on the third surface **910** of the second panel **908,** as shown in FIG. **10C****.**

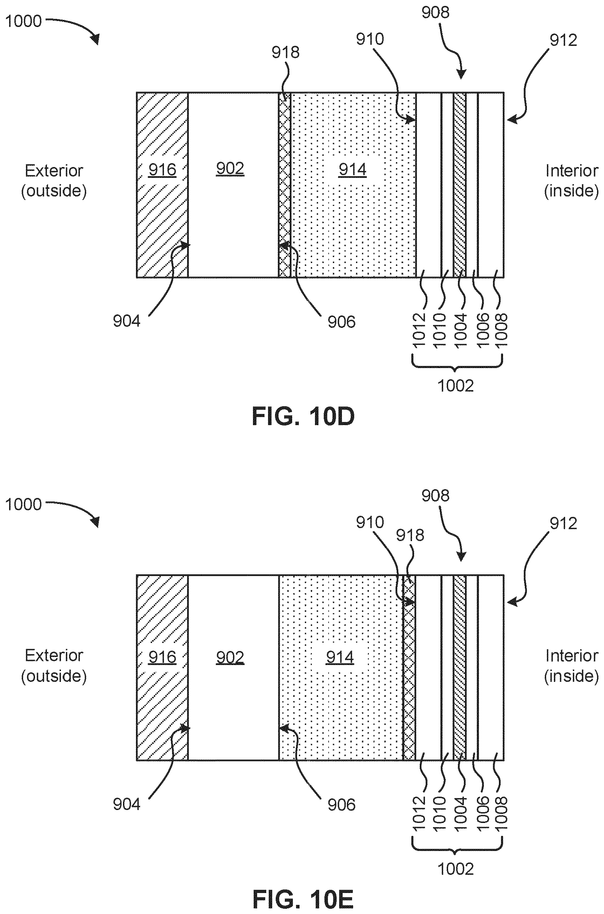

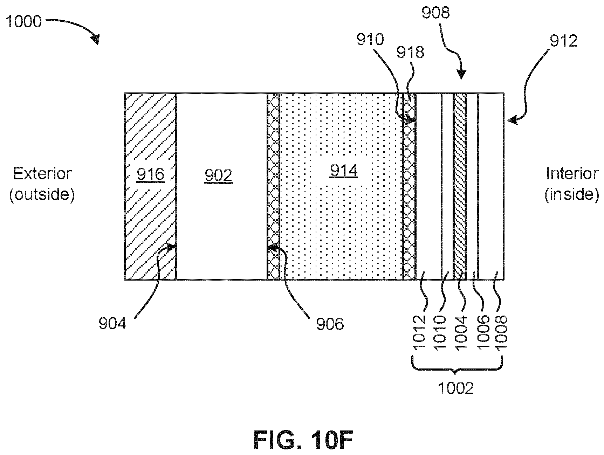

FIGS. **10D-10F** illustrate embodiments in which the second panel **908** of the double glazing structure **1000** has the laminated structure **1002** with the electrochromic film **1004** therein. The low-e coating **918** may be deposited on the second surface **906** of the first panel **902** (as shown in FIG. **10D**), the third surface **910** of the second panel **908** (as shown in FIG. **10E**), or on both the second surface **906** of the first panel **902** and the third surface **910** of the second panel **908** (as shown in FIG. **10F**).

The double glazing structure **1000** illustrated in FIGS. **10A-10F** includes two panels **902, 908,** where at least one of the panels includes a laminated structure **1002** with an electrochromic film **1004** disposed therein. The use of such a laminated structure with an electrochromic film disposed therein may also be applicable to glazing structures having any number of panels, such as those having more than two panels, in certain embodiments.

While not shown in FIGS. **10A-10F****,** the first panel **902** may have a first laminated structure **1002** with an electrochromic film **1004** therein, and the second panel **908** may have a second laminated structure **1002** with an electrochromic film **1004** therein, in some embodiments. In one such embodiment in which each of the panels **902, 908** have a laminated structure **1002** with an electrochromic film **1004** therein, a low e-coating **918** may be deposited on the second surface **906** of the first panel **902.** In another such embodiment in which each of the panels **902, 908** have a laminated structure **1002** with an electrochromic film **1004** therein, a low e-coating **918** may be deposited on the third surface **910** of the second panel **908.** In yet another such embodiment in which each of the panels **902, 908** have a laminated structure **1002** with an electrochromic film **1004** therein, a first low e-coating **918** may be deposited on the second surface **906** of the first panel **902,** and a second low e-coating **918** may be deposited on the third surface **910** of the second panel **908.**

### B. Double glazing structure having an electrochromic film deposited on at least one surface of at least one panel

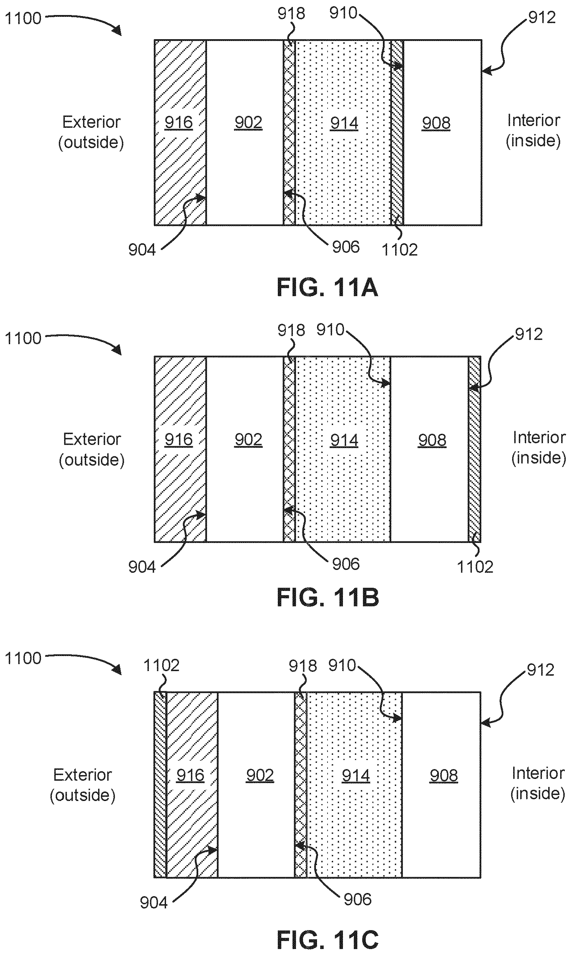

FIGS. **11A-11H** illustrate cross-sectional views of a double glazing structure **1100** in which at least one of the panels includes a laminated structure with an electrochromic film disposed therein, and where the electrochromic film comprise a solid state electrolyte disposed therein, according to various exemplary embodiments. The double glazing structure **1100** of FIGS. **11A-11H** may be implemented in combination with other devices/features/components described herein, such as those described with reference to other embodiments. The double glazing structure **1100** may also be used in various applications and/or in permutations, which may or may not be noted in the illustrative embodiments/aspects described herein. For instance, the double glazing structure **1100** may include more or less features/components than those shown in FIGS. **11A-11H****,** in some embodiments. Additionally, unless otherwise specified, one or more components of the double glazing structure **1100** may be of conventional material, design, and/or fabricated using known techniques, as would be appreciated by skilled artisans upon reading the present disclosure.

The double glazing structure **1100** of FIGS. **11A-11H** is directed to an exemplary variation of the double glazing structure **900** of FIG. **9****,** and thus may have common numbering therewith. For instance, as shown in FIGS. **11A-11H****,** the double glazing structure **1100** includes: a first panel **902** having first and second surfaces **904, 906;** a second panel **908** having third and fourth surfaces **910, 912;** a spacer **914** separating the first and second panels **902, 908;** one or more support units **916** configured to secure/attach one or more components of the structure **1100;** and a low-e coating **918** deposited on at least one surface of at least one panel.

As particularly shown in the embodiments of FIGS. **11A-11C****,** the double glazing structure **1100** may include the low-e coating **918** deposited on the second surface **906** of the first panel **902.** An electrochromic film **1102** may also be deposited on the third surface **910** of the second panel **908** (as shown in **FIG. 11A**), the fourth surface **912** of the second panel **908** (as shown in FIG. **11B**), or on the first surface **904** of the first panel **902** (as shown in FIG. **11C**).

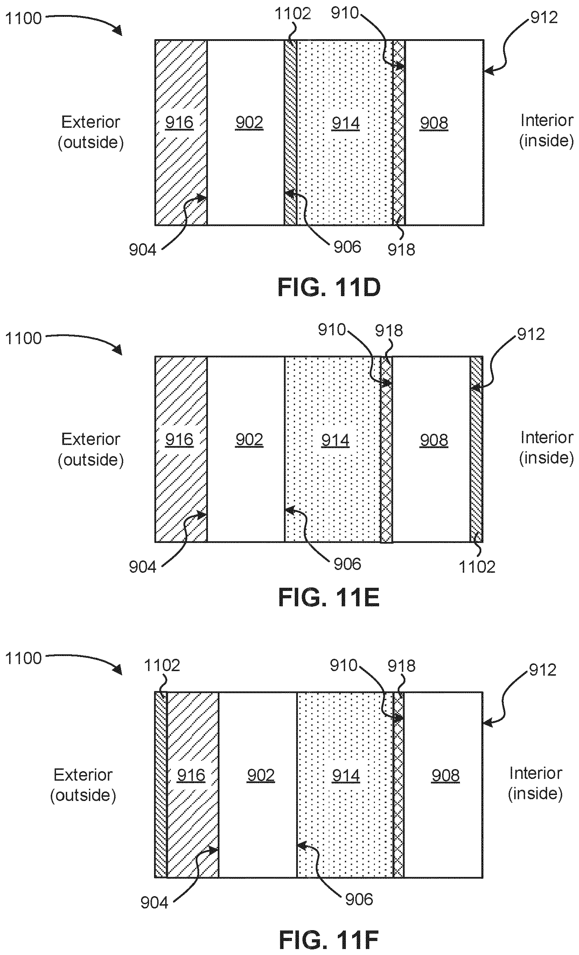

As further shown in the embodiments of FIGS. **11D-11F****,** the double glazing structure **1100** may include the low-e coating **918** deposited on the third surface **910** of the second panel **909.** An electrochromic film **1102** may also be deposited on the second surface **906** of the first panel **902** (as shown in FIG. **11D**), the fourth surface **912** of the second panel **908** (as shown in FIG. **11E**), or on the first surface **904** of the first panel **902** (as shown in FIG. **11F**).

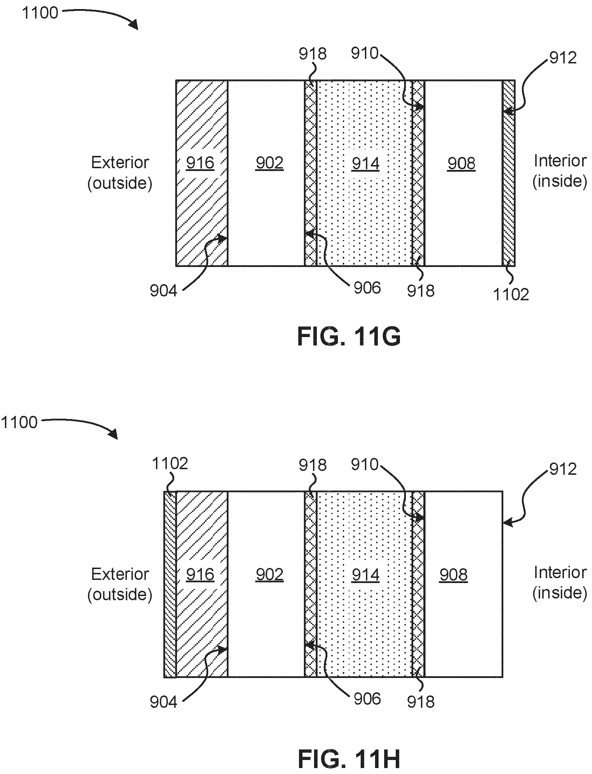

As additionally shown in the embodiments of FIGS. **11G-11H****,** the double glazing structure **1100** may include a first low-e coating **918** deposited on the second surface **906** of the first panel **902,** and a second low-e coating **918** deposited on the third surface **910** of the second panel **909.** An electrochromic film **1002** may also be deposited on the fourth surface **912** of the second panel **908** (as shown in FIG. **11G**), or on the first surface **904** of the first panel **902** (as shown in FIG. **11H**).

In certain embodiments, the electrochromic film **1102** of FIGS. **11A-11G** may be deposited on a particular panel surface of the double glazing structure **1102** via the method **100** described in FIG. **1****.**

### C. Double glazing structure in which an electrochromic film is disposed between, and not in physical contact with, two panels

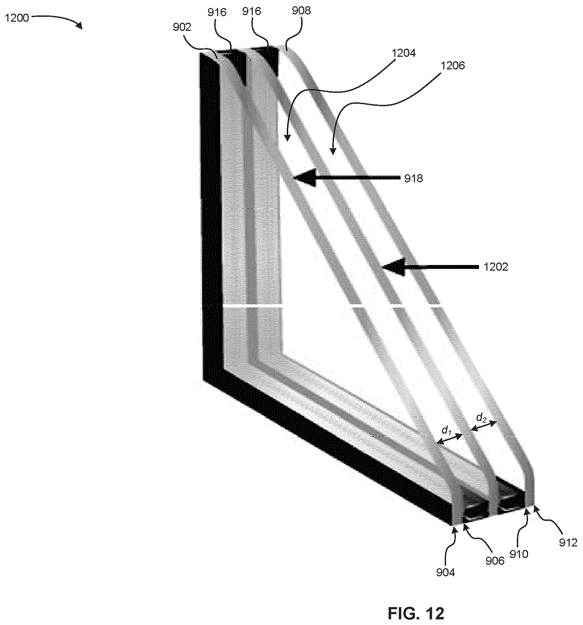

FIG. **12** illustrates a double glazing structure **1200** having at least two panels, and an electrochromic film disposed between, and not in physical contact with, the two panels, where the electrochromic film comprises a solid state electrolyte disposed therein. The double glazing structure **1200** of FIG. **12** may be implemented in combination with other devices/features/components described herein, such as those described with reference to other embodiments. The double glazing structure **1200** may also be used in various applications and/or in permutations, which may or may not be noted in the illustrative embodiments/aspects described herein. For instance, the double glazing structure **1200** may include more or less features/components than those shown in FIG. **12****,** in some embodiments. Additionally, unless otherwise specified, one or more components of the double glazing structure **1200** may be of conventional material, design, and/or fabricated using known techniques, as would be appreciated by skilled artisans upon reading the present disclosure.

The double glazing structure **1200** of FIG. **12** is directed to an exemplary variation of the double glazing structure **900** of FIG. **9****,** and thus may have common numbering therewith. For instance, as shown in FIG. **12****,** the double glazing structure **1200** includes: a first panel **902** having first and second surfaces **904, 906;** a second panel **908** having third and fourth surfaces **910, 912;** one or more support units **916** configured to secure/attach one or more components of the structure **1000;** and a low-e coating **918** deposited on at least one surface of at least one panel.

Moreover, as also shown in FIG. **12****,** the double glazing structure **1200** may include a central panel **1202** having an electrochromic film associated therewith, where the central panel (and associated electrochromic film) is positioned between the first and second panels **904, 908** in a configuration that prevents the central panel **1202** (and associated electrochromic film) from coming into physical contact with the first and second panels **904, 908.** The central panel **1202** may be separated from the first panel **902** by a first distance, *d₁*, and separated from the second panel **908** by a second distance, *d₂*, where *d₁* and *d₂* may or may not be equal. In some embodiments, the region **1204** between the central panel **1202** and the first panel **902,** and/or the region **1206** between the central panel **1202** and the second panel **908,** may be comprised of dry air, N₂, Argon, or other insert gas, as would be appreciated by skilled artisans upon reading the present disclosure.

In some embodiments, the central panel **1202** may include a laminated structure having the electrochromic film disposed therein. Such a laminated structure may be formed via the method **300** of FIG. **3****,** and/or have the configuration, composition, etc. of the laminated structure **500** of FIG. **5****.**

In some embodiments, the central panel **1202** may include a substrate (e.g., a transparent glass substrate) having the electrochromic film deposited on a surface thereof. In one such embodiment, the electrochromic film may be deposited on the surface of the substrate that faces toward the first panel **902.** In another such embodiment, the electrochromic film may be deposited on the surface of the substrate that faces toward the second panel **908.** In various embodiments, the electrochromic film may be deposited/adhered/laminated on the substrate via the method **100** of FIG. **1****.**

In some embodiments, the central panel **1202** may be comprised solely of the electrochromic film.

In the embodiment shown in FIG. **12****,** the low e-coating **918** is deposited on the second surface **906** of the first panel **902.** However, in another embodiment, the low e-coating **918** may be deposited on the third surface **910** of the second panel **908.** In yet another embodiment, a first low-coating **918** may be deposited on the second surface **906** of the first panel **902,** and a second low-e coating **918** may be deposited on the third surface **910** of the second panel **908.** Regardless of the position of the low-e coating **918** (e.g., on the second surface **906** of the first panel **902,** on the third surface **910** of the second panel **908,** or on both the second surface **906** of the first panel **902** and the third surface **910** of the second panel **908**), the central panel **1202** may include the electrochromic film in any of the configurations disclosed herein (e.g., the central panel **1202** comprising solely the electrochromic film, the central panel **1202** comprising the electrochromic film deposited directly on a surface of a substrate, or the central panel **1202** comprising a laminated structure with the electrochromic film disposed therein).

### Electrochromic film

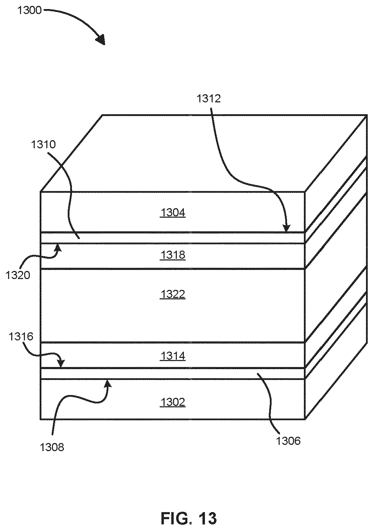

An exemplary, non-limiting schematic of an electrochromic film **1300** comprising a solid electrolyte disposed therein is shown in FIG. **13****,** according to one embodiment. It is important to note that the electrochromic film **1300** of FIG. **13** may be implemented in combination with other devices/features/components described herein, such as those described with reference to other embodiments/aspects. The electrochromic film **1300** may be used in various applications and/or in permutations, which may or may not be noted in the illustrative embodiments/aspects described herein. For instance, the electrochromic film **1300** may include more or less features/components than those shown in FIG. **13****,** in some embodiments. Additionally, unless otherwise specified, one or more components of the electrochromic film **1300** may be of conventional material, design, and/or fabricated using known techniques (e.g., sputtering, chemical vapor deposition (CVD), physical vapor deposition (PVD), plasma-enhanced chemical vapor deposition (PECVD), spray coating, slot-die coating, dip coating, spin coating, printing, etc.), as would be appreciated by skilled artisans upon reading the present disclosure.

As shown in FIG. **13****,** the electrochromic film **1300** includes a first transparent substrate **1302** and a second transparent substrate **1304** in spaced, parallel relation with one another. The first and second substrates **1302, 1304** may have the same or different dimensions, comprise the same or different material, etc. Suitable material for the first substrate **1302** and/or the second substrate **1304** may include, but is not limited to, glass, polymeric materials, plastic materials, and/or other materials which are transparent in at least part of the visible region of the electromagnetic spectrum. In some embodiments, the first and second substrates **1302, 1304** may comprise glass.

As also shown in FIG. **13****,** a first transparent electrically conductive film **1306** is deposited on the interior surface **1308** of the first substrate **1302** to act as an electrode. A second transparent electrically conductive film **1310** is also deposited on the interior surface **1312** of the second substrate **1304** to act as electrode. The first and second electrically conductive films **1306, 1310** may have the same or different dimensions, comprise the same or different material, etc. The first and second electrically conductive films **1306, 1310** may also each independently have a single layer or multilayer structure. Suitable material for the first and second electrically conductive films **1306, 1310** may include, but is not limited to, tin doped indium oxide (ITO), fluorine doped indium oxide, antimony doped indium oxide, zinc doped indium oxide, aluminum doped zinc oxide, silver nano wire, metal mesh, combinations thereof, and/or other such transparent material exhibiting sufficient electrical conductance. In preferred aspects, the first and second electrically conductive films **1306, 1310** may comprise ITO.

The electrochromic device **1300** may additionally include an electrical power supply (not shown) configured to supply voltage between the first and second electrically conductive films **1306, 1310.**

As further shown in FIG. **13****,** a layer **1314** of electrochromic material is deposited on the interior surface **1316** of the first electrically conductive film **1306.** The layer **1314** of electrochromic material is configured to effect a reversible color change upon reduction (gain of electrons) or oxidation (loss of electron) caused by exposure to an electrical current. In some embodiments, the layer **1314** of electrochromic material may be configured to change from a transparent state to a colored state, or from a colored state to another colored state, upon oxidation or reduction. In some embodiments, the layer **1314** of electrochromic material may be a polyelectrochromic material in which more than two redox states are possible, and may thus exhibit several colors.

In some embodiments, the layer **1314** of electrochromic material may comprise an organic electrochromic material, an inorganic electrochromic material, a mixture of both, etc. The layer **1314** of electrochromic material may also be a reduction colored material (i.e., a material that becomes colored upon acquisition of electrons), or an oxidation colored material (i.e., a material that becomes colored upon the loss of electrons).

In some embodiments, the layer **1314** of electrochromic material may include a metal oxide such as MoO₃, V₂O₅, Nb₂O₅, WO₃, TiO₂, Ir(OH)ₓ, SrTiO₃, ZrO₂, La2O₃, CaTiO₃, sodium titanate, potassium niobate, combinations thereof, etc. In some embodiments, the layer **1314** of electrochromic material may include a conductive polymer such as poly-3,4-ethylenedioxy thiophene (PEDOT), poly-2,2'-bithiophene, polypyrrole, polyaniline (PANI), polythiopene, polyisothianaphthene, poly(o-aminophenol), polypyridine, polyindole, polycarbazole, polyquinone, octacyanophthalocyanine, combinations thereof, etc. Moreover, in some embodiments, the layer **1314** of electrochromic material may include materials, such as viologen, anthraquinone, phenocyazine, combinations thereof, etc. Additional examples of electrochromic materials, particularly those including multicolored electrochromic polymers, may be found in U.S. Patent Application No. 62/331,760, filed May 4, 2016, the entirety of which is herein incorporated by reference.

As additionally shown in FIG. **13****,** a charge storage layer **1318** is deposited on the interior surface **1320** of the second electrically conductive film **1310.** Suitable materials for the charge storage layer **1318** may include, but are not limited to, vanadium oxide, binary oxides (e.g., CoO, IrO₂, MnO, NiO, and PrOₓ), ternary oxides (e.g., CeₓV_{y}O_{z}), etc.

In some embodiments, the charge storage layer **1318** may be replaced with an optional second layer of electrochromic material. This optional second layer of electrochromic material may have the same or different dimensions, comprise the same or different composition, etc., as the first layer **1314** of electrochromic material.

The electrochromic device **1300** also includes an electrolyte layer **1322** positioned between the layer **1314** of electrochromic material and the charge storage layer **1318.** In some embodiments, the electrolyte layer **1322** may include a liquid electrolyte as known in the art. In some embodiments, the electrolyte layer **1322** may include a solid state electrolyte, including but not limited to, Ta₂O₅, MgF, Li₃N, LiPO₄, LiBO₂-Li₂SO₄, etc. In some embodiments, the electrolyte layer **1322** may include a polymer based electrolyte comprising an electrolyte salt (e.g., LiTFSI, LiPF₆, LiBF₄, LiClO₄, LiCF₃SO₃, LiN(CF₃SO₂)₂, LiSbFg, LiAsF₆, LiN(CF₃CF₂SO₂)₂, (C₂H₅)₄NBF₄, (C₂H₅)₃CH₃NBF₄, LiI, etc.), a polymer matrix (e.g., polyethylene oxide, poly(vinylidene fluoride( PVDF), poly(methyl methacrylate) (PMMA), polyethylene oxide (PEO), poly(acrylonitrile) (PAN), polyvinyl nitrile, etc.), and one or more optional plasticizers (e.g., glutaronitrile, succinonitrile, adiponitrile, fumaronitrile, etc.).

In some embodiments, the electrolyte layer **1322** comprises a solid polymer electrolyte. In one embodiment, the solid polymer electrolyte comprises a polymer framework, at least one solid plasticizer, and at least one electrolyte salt. In some embodiments, the polymer framework may include a polar polymer material having an average molecular weight of about 10,000 Daltons or greater. In particular embodiments, the polar polymer material may have an average molecular weight in a range from about 10,000 Daltons to about 800,000,000 Daltons. In some embodiments, the polar polymer material may be present in an amount ranging from about 15 wt.% to about 80 wt.% based on the total weight of the solid polymer electrolyte.

The aforementioned polar polymer material may include one or more polar polymers, each of which may include one or more of: C, N, F, O, H, P, F, etc. Suitable polar polymers may include, but are not limited to, polyethylene oxide, poly(vinylidene fluoride-hexafluoropropylene, poly(methyl methacrylate), polyvinyl nitrile, combinations thereof, etc. In embodiments where a plurality of polar polymers is present, the polymers may be crosslinked to form a network having enhanced mechanical properties.

The polar polymer material may have a sufficient amorphicity so as to achieve sufficient ion conductivity. Amorphous polymer materials typically exhibit high ion conductivities. Accordingly, in some embodiments, the polar material disclosed herein may have an amorphous, or a substantially amorphous, microstructure.

In some embodiments, the polar polymer material may have a semicrystalline or crystalline microstructure. In such cases, various modifications may be implemented with respect to the polymer material to suppress the crystallinity thereof. For instance, one modification may involve use of branched polar polymers, linear random copolymers, block copolymers, comb polymers, and/or star-shaped polar polymers. Another modification may include incorporation of an effective amount of solid plasticizers in the polar polymer material, as discussed in greater detail below.

Various properties of the polar polymer material also may be selected and/or modified to maximize ion conductivity. These properties may include, but are not limited to, glass transition temperature, segmental mobility/flexibility of the polymer backbone and/or any side chains attached thereto, orientation of the polymers, etc.

As noted above, the presently disclosed solid electrolyte may include at least one solid plasticizer. The at least one solid plasticizer may be substantially miscible in the polymer framework of the solid plasticizer. The at least one solid plasticizer may include an organic material (e.g., small, solid organic molecules) and/or an oligomeric polymer material, in some embodiments. In various embodiments, the at least one solid plasticizer may be selected from the group including glutaronitrile, succinonitrile, adiponitrile, fumaronitrile, and combinations thereof.

In some embodiments, a plurality of solid plasticizers may be present in the polymer framework, where each plasticizer may independently include an organic material (e.g., small, solid organic molecules) and/or an oligomeric polymer material. Particularly, each plasticizer may independently be glutaronitrile, succinonitrile, adiponitrile, fumaronitrile, etc. Moreover, the dimensions of at least two, some, a majority, or all of the plasticizers may be the same or different as one another.

In some embodiments, the total amount of solid plasticizer may be in a range from about 20 wt.% to about 80 wt.% based on the total weight of the solid electrolyte.

As additionally noted above, the solid polymer electrolyte may include at least one electrolyte salt. In some embodiments, the at least one electrolyte salt may comprise an organic salt. In some embodiments, the at least one electrolyte salt may comprise an inorganic salt. Suitable electrolyte salts may include, but are not limited to, LiTFSI, LiPF₆, LiBF₄, LiClO₄, LiCF₃SO₃, LiN(CF₃SO₂)₂, LiSbFg, LiAsF₆, LiN(CF₃CF₂SO₂)₂, (C₂H₅)₄NBF₄, (C₂H₅)₃CH₃NBF₄, LiI, combinations thereof, etc. In some embodiments, the total amount of electrolyte salt may be in a range from about 10 wt.% to about 50 wt.% based on the total weight of the solid electrolyte.

The solid polymer electrolyte is distinguishable from conventional liquid electrolytes, as well as gel polymer electrolytes including an ionic liquid therein. In other words, the presently disclosed solid polymer electrolyte may be an all solid polymer electrolyte, and does not include any liquid or gel components therein. The presently disclosed solid polymer electrolyte may also be transparent in some aspects. Additionally, the solid polymer electrolyte may have an ion conductivity in a range from about 10⁻⁷ S/cm to about 10⁻³ S/cm.

Methods of making the presently disclosed solid polymer electrolyte may include synthesis, polymerization, solvation, etc. processes as known in the art. In one particular, non-limiting embodiment, a method of making the presently disclosed polymer electrolyte may include: (a) combining the polymer framework, the at least one plasticizer, and the at least one electrolyte salt in an appropriate solvent; and (b) removing the solvent to obtain the solid polymer electrolyte. Exemplary solvents may include, but are not limited to, acetone, methanol, tetrahydrofuran, etc. In some embodiments, one or more experimental parameters may be optimized to facilitate the dissolving of the polymer framework, plasticizer, and electrolyte salt in the solvent. These experimental parameters may include the components remain in the solvent, agitation/stirring of the solvent, etc.

In some embodiments, the electrolyte layer **1322** of FIG. **13** comprises a solid polymer electrolyte, such as the solid polymer electrolytes described above, and does not include any liquid or gel electrolyte. Such a solid polymer electrolyte (i) has sufficient mechanical strength yet is versatile in shape so as to allow easy formation into thin films, and thin-film shaped products; (ii) avoids issues related to adhesion and print processing affecting conventional electrolytes; (iii) provides stable contact between the electrolyte/electrode interfaces (those with and without the electrochromic material coating thereon); (iv) avoids the problem of leakage commonly associated with liquid electrolytes; (v) has desirable non-toxic and non-flammable properties; (vi) avoids problems associated with evaporation due to its lack of vapor pressure; (vii) exhibits improved ion conductivities as compared to convention polymer electrolytes; etc.

Additional examples of electrolyte materials, particularly those including solid polymer electrolytes, may be found in U.S. Patent Application No. 62/323,407, filed April 15, 2016, the entirety of which is herein incorporated by reference.

### EXAMPLES

### 1. Electrochromic film laminated directly on a glass substrate

An electrochromic film was fabricated in the configuration of: PET/ITO/Electrochromic Layer/Solid State Electrolyte Layer/Charge Storage Layer/ITO/PET. The basic structure of the electrochromic film is provided in FIG. **13****.** Both the bottom electrode and the top electrode of the electrochromic film are flexible PET/ITO films. The sheet resistance of the film ranges from 1 Ω/sq to 200 Ω/sq. The transmission of the film ranges from 95% to 10%.

Fabrication of the electrochromic film involved depositing the electrochromic layer and the solid state electrolyte in sequence on the bottom electrode using slot-die coating. The charge storage layer was deposited on the top electrode using slot-die coating. Subsequently, the bottom electrode and the top electrode were laminated together.

To laminate the electrochromic film directly onto the glass, the glass's surface was first thoroughly cleaned. Following the process described in method **100** of FIG. **1****,** the electrochromic film was laminated onto the glass.

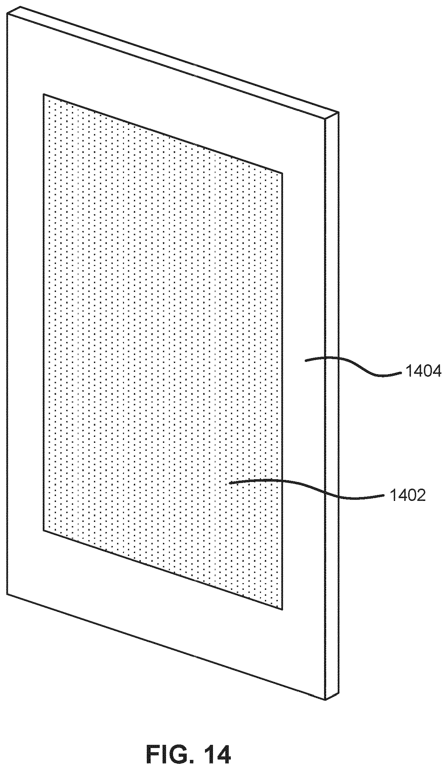

FIG. **14** provides a schematic representation of the resulting structure comprising the glass substrate **1402** with the electrochromic film **1404** laminated directly thereon.

### 2. Laminated glass structure with an electrochromic film disposed therein

The electrochromic film comprising a solid state electrolyte therein was fabricated as disclosed in Example 1. To laminate the electrochromic film inside two glass panels, the electrochromic film was interposed (sandwiched) between two EVA adhesive interlayers, and placed between two glass panels. The assembly was put inside a vacuum oven to bake at 125 °C for 30 minutes.

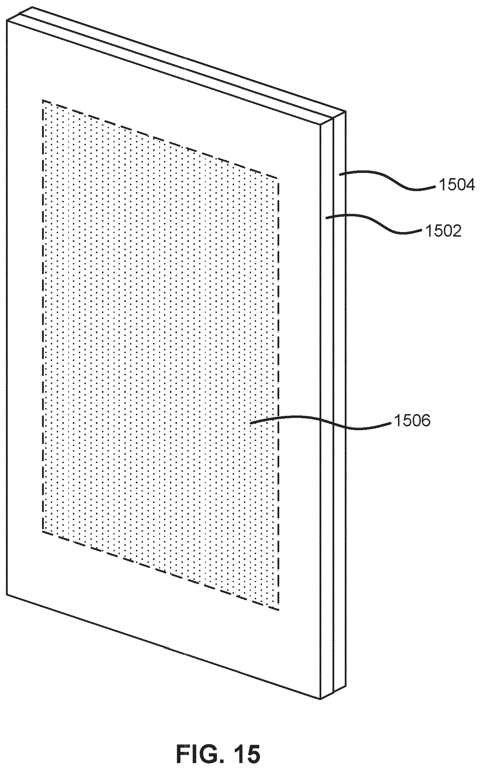

FIG. **15** provides a schematic representation of the resulting laminated glass structure comprising the two glass panels **1502, 1504** and the electrochromic film **1506** therebetween.

### 3. Smart window module comprising a laminated glass structure with an electrochromic film disposed therein

Laminated glass with an electrochromic film inside was fabricated as described in Example 2. Subsequently, the laminated glass having the electrochromic film inside was integrated with a frame to function as a smart window module.

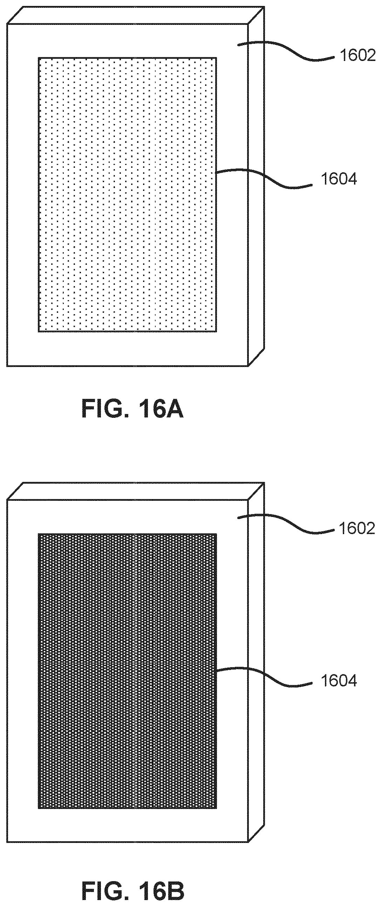

FIGS. **16A-16B** provide schematic representations of the resulting smart window module comprising the support unit **1602,** and the laminated, transparent glass structure **1604** having the electrochromic film inside. As particularly shown in FIG. **16A-16B****,** the electrochromic film is in a transparent state and an opaque state, respectively, as indicated by the different stippling patterns.

### 4. Formation of a solid polymer electrolyte configured for use in an electrochromic film

An exemplary solid polymer electrolyte as discussed herein was prepared as follows.

The following components were combined: 40 wt.% PEO having a molecular weight of 1,000,000; 10 wt.% PEO having a molecular weight of 1,500; 30 wt.% succinonitrile; and 20 wt.%, LiClO₄. The combined components were mixed in an acetone solvent and stirred overnight to obtain a solution. The solution was processed and deposited on a PEDOT-PSS electrochromic layer via spin-coating, dip-coating, drop-casting, blade coating, screen printing, etc. After drying the solvent, the resulting solid electrolyte was found to be transparent with an ion conductivity of about 10⁻⁴ S/cm.

An electrochromic film was formed comprising a first transparent ITO-coated glass electrode on which the PEDOT-PESS electrochromic layer was deposited, as well as a second transparent ITO-coated glass electrode, where the solid electrolyte was located/sandwiched between the transparent ITO/PEDOT-PSS layers and the second transparent ITO glass layer. This particular electrochromic device was found to switch to a blue color at 5 V, and switch back to colorless at -2 V.

### APPLICATIONS/USES

Embodiments of the methods and systems disclosed herein may be used in various applications, devices, industries etc. For instance, several exemplary methods for integrating one or more electrochromic films onto and/or within a substrate structure have been presented herein. Such methods allow for a low cost, reproducible, and convenient process by which an end user may integrate the electrochromic film(s) with a desired substrate structure. Applications for such methods and the resulting products include, but are not limited to smart window and display technology, e.g., anti-glare car mirrors, smart windows configured to modulate the transmission or reflected solar radiation for use in cars, aircrafts, buildings, and the like; protective eyewear; camouflage and/or chameleonic materials; polymer photovoltaic devices; field effect transistors; batteries; supercapacitors; light emitting diodes; and other electrochromic and electronic devices.

The invention described and claimed herein is not to be limited in scope by the specific preferred embodiments disclosed herein, as these embodiments are intended as illustrations of several aspects of the invention. Indeed, various modifications of the invention in addition to those shown and described herein will become apparent to those skilled in the art from the foregoing description. Such modifications are also intended to fall within the scope of the appended claims.

## Claims

1. A double-glazing structure, comprising:
a first panel (902) comprising a first surface (904) and a second surface (906) opposite of the first surface;
a second panel (908) comprising a third surface (910) and a fourth surface (912), the third surface of the second panel facing the second surface of the first panel;
a laminated structure (1002) disposed inside the first panel (902) or the second panel (908), wherein the laminated structure comprises:
an electrochromic film (1004,1300);
a first adhesive interlayer (1006) interposed between the electrochromic film (1004,1300) and a first substrate (1008); and
a second adhesive interlayer (1010) interposed between the electrochromic film (1004,1300) and a second substrate (1012);
a low-emissivity coating (918) disposed between the first panel (902) and the second panel (908); and
a spacer (914) disposed between the first panel and the second panel.

2. The double-glazing structure of claim 1, wherein:
the laminated structure (1002) is disposed inside the first panel (902) and on the second surface (906) of the first panel;
the low-emissivity coating (918) is disposed outside of the first panel (902) and on the second surface (906) of the first panel contacting the laminated structure (1002); and
the spacer (914) is disposed next to the low-emissivity coating (918).

3. The double-glazing structure of claim 1, wherein:
the laminated structure (1002) is disposed inside the first panel (902) and on the second surface (906) of the first panel;
the spacer (914) is disposed outside of the first panel (902) and on the second surface (906) of the first panel contacting the laminated structure (1002); and
the low-emissivity coating (918) is disposed next to the spacer (914) and on the third (910) surface of the second panel (908).

4. The double-glazing structure of claim 1, wherein:
the laminated structure (1002) is disposed inside the first panel (902) and on the second surface (906) of the first panel;
the low-emissivity coating (918) is disposed outside of the first panel (902) and on the second surface (906) of the first panel contacting the laminated structure (1002);
the spacer (914) is disposed next to the low-emissivity coating (918); and
a second low-emissivity coating (918) is disposed next to the spacer (914) and on the third surface (910) of the second panel (908).

5. The double-glazing structure of claim 1, wherein:
the laminated structure (1002) is disposed inside the second panel (908) and on the third surface (910) of the second panel;
the spacer (914) is disposed outside of the second panel (908) and on the third surface (910) of the second panel (908) contacting the laminated structure (1002); and
the low-emissivity coating (918) is disposed next to the spacer (914).

6. The double-glazing structure of claim 1, wherein:
the laminated structure (1002) is disposed inside the second panel (908) and on the third surface (910) of the second panel;
the low-emissivity coating (918) is disposed outside of the second panel (908) and on the third surface (910) of the second panel contacting the laminated structure (1002); and
the spacer (914) is disposed next to the low-emissivity coating (918).

7. The double-glazing structure of claim 1, wherein:
the laminated structure (1002) is disposed inside the second panel (908) and on the third surface (910) of the second panel;
the low-emissivity coating (918) is disposed outside of the second panel (908) and on the third surface (910) of the second panel contacting the laminated structure (1002);
the spacer (914) is disposed next to the low-emissivity coating (918); and
a second low-emissivity coating (918) is disposed next to the spacer (914) and on the second surface (904) of the first panel (902).

8. The double-glazing structure of claim 1, wherein the electrochromic film (1004,1300) comprises:
a first transparent electrically conductive film (1306);
a second transparent electrically conductive film (1310);
a layer of electrochromic material (1314) disposed between the first transparent electrically conductive film (1306) and the second transparent electrically conductive film (1310);
a charge storage layer (1318) disposed on the second transparent electrically conductive film (1310); and
an electrolyte layer (1322) disposed between the layer of electrochromic material and the charge storage layer.

9. The double-glazing structure of claim 8, wherein the electrolyte layer (1322) comprises:
an electrolyte salt selected from LiTFSI, LiPF6, LiBF4, LiClO4, LiCF3SO3, LiN(CF3SO2)2, LiSbFg, LiAsF6, LiN(CF3CF2SO2)2, (C2H5)4NBF4, (C2H5)3CH3NBF4, or LiI;
and
a polymer matrix.

10. A method of forming a double-glazing structure, comprising:
forming a first panel having a first surface and a second surface opposite of the first surface;
forming a second panel having a third surface and a fourth surface, the third surface of the second panel facing the second surface of the first panel;
disposing a laminated structure inside the first panel on the second surface or inside the second panel on the third surface, wherein the laminated structure comprises:
an electrochromic film;
a first adhesive interlayer interposed between the electrochromic film and a first substrate; and
a second adhesive interlayer interposed between the electrochromic film and a second substrate;
disposing a low-emissivity coating on the second surface of the first panel or the third surface of the second panel; and
disposing a spacer between the first panel and the second panel.

11. The method of claim 10, further comprising:
disposing a layer of electrochromic material between a first transparent electrically conductive film and a second transparent electrically conductive film;
disposing a charge storage layer on the second transparent electrically conductive film; and
disposing an electrolyte layer between the layer of electrochromic material and the charge storage layer.

12. The method of claim 10, wherein the disposing the laminated structure comprises:
disposing the laminated structure inside the first panel and on the second surface of the first panel;
disposing the low-emissivity coating outside of the first panel and on the second surface of the first panel contacting the laminated structure; and
disposing the spacer next to the low-emissivity coating.

13. The method of claim 10, wherein the disposing the laminated structure comprises:
disposing the laminated structure inside the first panel and on the second surface of the first panel;
disposing the spacer outside of the first panel and on the second surface of the first panel contacting the laminated structure; and
disposing the low-emissivity coating next to the spacer and on the third surface of the second panel.

14. The method of claim 10, wherein the disposing the laminated structure comprises:
disposing the laminated structure inside the first panel and on the second surface of the first panel;
disposing the low-emissivity coating outside of the first panel and on the second surface of the first panel contacting the laminated structure;
disposing the spacer next to the low-emissivity coating; and
disposing a second low-emissivity coating next to the spacer and on the third surface of the second panel.

15. The method of claim 10, wherein the disposing the laminated structure comprises:
disposing the laminated structure inside the second panel and on the third surface of the second panel;
disposing the spacer outside of the second panel and on the third surface of the second panel contacting the laminated structure; and
disposing the low-emissivity coating next to the spacer.

## Patentansprüche

1. Doppelverglasungsstruktur, umfassend:
eine erste Platte (902), die eine erste Fläche (904) und eine zweite Fläche (906) gegenüber der ersten Fläche umfasst;
eine zweite Platte (908), die eine dritte Fläche (910) und eine vierte Fläche (912) umfasst, wobei die dritte Fläche der zweiten Platte der zweiten Fläche der ersten Platte zugewandt ist;
eine laminierte Struktur (1002), die an der Innenseite der ersten Platte (902) oder der zweiten Platte (908) angeordnet ist, wobei die laminierte Struktur umfasst:
einen elektrochromen Film (1004, 1300);
eine erste adhäsive Zwischenschicht (1006), die zwischen dem elektrochromen Film (1004, 1300) und einem ersten Substrat (1008) eingefügt ist; und
eine zweite adhäsive Zwischenschicht (1010), die zwischen dem elektrochromen Film (1004, 1300) und einem zweiten Substrat (1012) eingefügt ist;
eine Beschichtung (918) mit niedrigem Emissionsvermögen, die zwischen der ersten Platte (902) und der zweiten Platte (908) angeordnet ist; und
einen Abstandhalter (914), der zwischen der ersten Platte und der zweiten Platte angeordnet ist.

2. Doppelverglasungsstruktur nach Anspruch 1, wobei:
die laminierte Struktur (1002) an der Innenseite der ersten Platte (902) und auf der zweiten Fläche (906) der ersten Platte angeordnet ist;
die Beschichtung (918) mit niedrigem Emissionsvermögen an der Außenseite der ersten Platte (902) und auf der zweiten Fläche (906) der ersten Platte, die mit der laminierten Struktur (1002) in Kontakt steht, angeordnet ist; und
der Abstandhalter (914) neben der Beschichtung (918) mit niedrigem Emissionsvermögen angeordnet ist.

3. Doppelverglasungsstruktur nach Anspruch 1, wobei:
die laminierte Struktur (1002) an der Innenseite der ersten Platte (902) und auf der zweiten Fläche (906) der ersten Platte angeordnet ist;
der Abstandhalter (914) an der Außenseite der ersten Platte (902) und auf der zweiten Fläche (906) der ersten Platte, die mit der laminierten Struktur (1002) in Kontakt steht, angeordnet ist; und
die Beschichtung (918) mit niedrigem Emissionsvermögen neben dem Abstandhalter (914) und auf der dritten Fläche (910) der zweiten Platte (908) angeordnet ist.

4. Doppelverglasungsstruktur nach Anspruch 1, wobei:
die laminierte Struktur (1002) an der Innenseite der ersten Platte (902) und auf der zweiten Fläche (906) der ersten Platte angeordnet ist;
die Beschichtung (918) mit niedrigem Emissionsvermögen an der Außenseite der ersten Platte (902) und auf der zweiten Fläche (906) der ersten Platte, die mit der laminierten Struktur (1002) in Kontakt steht, angeordnet ist;
der Abstandhalter (914) neben der Beschichtung (918) mit niedrigem Emissionsvermögen angeordnet ist; und
eine zweite Beschichtung (918) mit niedrigem Emissionsvermögen neben dem Abstandhalter (914) und auf der dritten Fläche (910) der zweiten Platte (908) angeordnet ist.

5. Doppelverglasungsstruktur nach Anspruch 1, wobei:
die laminierte Struktur (1002) an der Innenseite der zweiten Platte (908) und auf der dritten Fläche (910) der zweiten Platte angeordnet ist;
der Abstandhalter (914) an der Außenseite der zweiten Platte (908) und auf der dritten Fläche (910) der zweiten Platte (908), die mit der laminierten Struktur (1002) in Kontakt steht, angeordnet ist; und
die Beschichtung (918) mit niedrigem Emissionsvermögen neben dem Abstandhalter (914) angeordnet ist.

6. Doppelverglasungsstruktur nach Anspruch 1, wobei:
die laminierte Struktur (1002) an der Innenseite der zweiten Platte (908) und auf der dritten Fläche (910) der zweiten Platte angeordnet ist;
die Beschichtung (918) mit niedrigem Emissionsvermögen an der Außenseite der zweiten Platte (908) und auf der dritten Fläche (910) der zweiten Platte, die mit der laminierten Struktur (1002) in Kontakt steht, angeordnet ist; und
der Abstandhalter (914) neben der Beschichtung (918) mit niedrigem Emissionsvermögen angeordnet ist.

7. Doppelverglasungsstruktur nach Anspruch 1, wobei:
die laminierte Struktur (1002) an der Innenseite der zweiten Platte (908) und auf der dritten Fläche (910) der zweiten Platte angeordnet ist;
die Beschichtung (918) mit niedrigem Emissionsvermögen an der Außenseite der zweiten Platte (908) und auf der dritten Fläche (910) der zweiten Platte, die mit der laminierten Struktur (1002) in Kontakt steht, angeordnet ist;
der Abstandhalter (914) neben der Beschichtung (918) mit niedrigem Emissionsvermögen angeordnet ist; und
eine zweite Beschichtung (918) mit niedrigem Emissionsvermögen neben dem Abstandhalter (914) und auf der zweiten Fläche (904) der ersten Platte (902) angeordnet ist.

8. Doppelverglasungsstruktur nach Anspruch 1, wobei der elektrochrome Film (1004, 1300) umfasst:
einen ersten transparenten, elektrisch leitfähigen Film (1306);
einen zweiten transparenten, elektrisch leitfähigen Film (1310);
eine Schicht aus elektrochromem Material (1314), die zwischen dem ersten transparenten, elektrisch leitfähigen Film (1306) und dem zweiten transparenten, elektrisch leitfähigen Film (1310) angeordnet ist;
eine Ladungsspeicherschicht (1318), die auf dem zweiten transparenten, elektrisch leitfähigen Film (1310) angeordnet ist; und
eine Elektrolytschicht (1322), die zwischen der Schicht aus elektrochromem Material und der Ladungsspeicherschicht angeordnet ist.

9. Doppelverglasungsstruktur nach Anspruch 8, wobei die Elektrolytschicht (1322) umfasst:
ein Elektrolytsalz, ausgewählt aus LiTFSI, LiPF6, LiBF4, LiClO4, LiCF3SO3, LiN(CF3SO2)2, LiSbFg, LiAsF6, LiN(CF3CF2SO2)2, (C2H5)4NBF4, (C2H5)3CH3NBF4 oder Lil;
und
eine Polymermatrix

10. Verfahren zum Bilden einer Doppelverglasungsstruktur, umfassend:
Bilden einer ersten Platte, die eine erste Fläche und eine zweite Fläche gegenüber der ersten Fläche aufweist;
Bilden einer zweiten Platte, die eine dritte Fläche und eine vierte Fläche aufweist, wobei die dritte Fläche der zweiten Platte der zweiten Fläche der ersten Platte zugewandt ist;
Anordnen einer laminierten Struktur an der Innenseite der ersten Platte auf der zweiten Fläche oder an der Innenseite der zweiten Platte auf der dritten Fläche, wobei die laminierte Struktur umfasst:
einen elektrochromen Film;
eine erste adhäsive Zwischenschicht, die zwischen dem elektrochromen Film und einem ersten Substrat eingefügt ist; und
eine zweite adhäsive Zwischenschicht, die zwischen dem elektrochromen Film und einem zweiten Substrat eingefügt ist;
Anordnen einer Beschichtung mit niedrigem Emissionsvermögen auf der zweiten Fläche der ersten Platte oder der dritten Fläche der zweiten Platte; und.
Anordnen eines Abstandhalters zwischen der ersten Platte und der zweiten Platte.

11. Verfahren nach Anspruch 10, ferner umfassend:
Anordnen einer Schicht aus elektrochromem Material zwischen einem ersten transparenten, elektrisch leitfähigen Film und einem zweiten transparenten, elektrisch leitfähigen Film;
Anordnen einer Ladungsspeicherschicht auf dem zweiten transparenten, elektrisch leitfähigen Film; und
Anordnen einer Elektrolytschicht zwischen der Schicht aus elektrochromem Material und der Ladungsspeicherschicht.

12. Verfahren nach Anspruch 10, wobei das Anordnen der laminierten Struktur umfasst:
Anordnen der laminierten Struktur an der Innenseite der ersten Platte und auf der zweiten Fläche der ersten Platte;
Anordnen der Beschichtung mit niedrigem Emissionsvermögen an der Außenseite der ersten Platte und auf der zweiten Fläche der ersten Platte, die mit der laminierten Struktur in Kontakt steht; und
Anordnen des Abstandhalters neben der Beschichtung mit niedrigem Emissionsvermögen.

13. Verfahren nach Anspruch 10, wobei das Anordnen der laminierten Struktur umfasst:
Anordnen der laminierten Struktur an der Innenseite der ersten Platte und auf der zweiten Fläche der ersten Platte;
Anordnen des Abstandhalters an der Außenseite der ersten Platte und auf der zweiten Fläche der ersten Platte, die mit der laminierten Struktur in Kontakt steht; und
Anordnen der Beschichtung mit niedrigem Emissionsvermögen neben dem Abstandhalter und auf der dritten Fläche der zweiten Platte.

14. Verfahren nach Anspruch 10, wobei das Anordnen der laminierten Struktur umfasst:
Anordnen der laminierten Struktur an der Innenseite der ersten Platte und auf der zweiten Fläche der ersten Platte;
Anordnen der Beschichtung mit niedrigem Emissionsvermögen an der Außenseite der ersten Platte und auf der zweiten Fläche der ersten Platte, die mit der laminierten Struktur in Kontakt steht;
Anordnen des Abstandhalters neben der Beschichtung mit niedrigem Emissionsvermögen; und
Anordnen einer zweiten Beschichtung mit niedrigem Emissionsvermögen neben dem Abstandhalter und auf der dritten Fläche der zweiten Platte.

15. Verfahren nach Anspruch 10, wobei das Anordnen der laminierten Struktur umfasst:
Anordnen der laminierten Struktur an der Innenseite der zweiten Platte und auf der dritten Fläche der zweiten Platte;
Anordnen des Abstandhalters an der Außenseite der zweiten Platte und auf der dritten Fläche der zweiten Platte, die mit der laminierten Struktur in Kontakt steht; und
Anordnen der Beschichtung mit niedrigem Emissionsvermögen neben dem Abstandhalter.

## Revendications

1. Structure à double vitrage, comprenant :
un premier panneau (902) comprenant une première surface (904) et une deuxième surface (906) opposée à la première surface ;
un deuxième panneau (908) comprenant une troisième surface (910) et une quatrième surface (912), la troisième surface du deuxième panneau faisant face à la deuxième surface du premier panneau ;
une structure stratifiée (1002) disposée à l'intérieur du premier panneau (902) ou du deuxième panneau (908), dans lequel la structure stratifiée comprend :
un film électrochromique (1004, 1300) ;
une première couche intermédiaire adhésive (1006) intercalée entre le film électrochromique (1004, 1300) et un premier substrat (1008) ; et
une deuxième couche intermédiaire adhésive (1010) intercalée entre le film électrochromique (1004, 1300) et un deuxième substrat (1012) ;
un revêtement à faible émissivité (918) disposé entre le premier panneau (902) et le deuxième panneau (908) ; et
une entretoise (914) disposée entre le premier panneau et le deuxième panneau.

2. Structure à double vitrage selon la revendication 1, dans laquelle :
la structure stratifiée (1002) est disposée à l'intérieur du premier panneau (902) et sur la deuxième surface (906) du premier panneau ;
le revêtement à faible émissivité (918) est disposé à l'extérieur du premier panneau (902) et sur la deuxième surface (906) du premier panneau en contact avec la structure stratifiée (1002) ; et
l'entretoise (914) est disposée près du revêtement à faible émissivité (918).

3. Structure à double vitrage selon la revendication 1, dans laquelle :
la structure stratifiée (1002) est disposée à l'intérieur du premier panneau (902) et sur la deuxième surface (906) du premier panneau ;
l'entretoise (914) est disposée à l'extérieur du premier panneau (902) et sur la deuxième surface (906) du premier panneau en contact avec la structure stratifiée (1002) ; et
le revêtement à faible émissivité (918) est disposé près de l'entretoise (914) et sur la troisième (910) surface du deuxième panneau (908).

4. Structure à double vitrage selon la revendication 1, dans laquelle :
la structure stratifiée (1002) est disposée à l'intérieur du premier panneau (902) et sur la deuxième surface (906) du premier panneau ;
le revêtement à faible émissivité (918) est disposé à l'extérieur du premier panneau (902) et sur la deuxième surface (906) du premier panneau en contact avec la structure stratifiée (1002) ;
l'entretoise (914) est disposée près du revêtement à faible émissivité (918) ; et
un deuxième revêtement à faible émissivité (918) est disposé près de l'entretoise (914) et sur la troisième surface (910) du deuxième panneau (908).

5. Structure à double vitrage selon la revendication 1, dans laquelle :
la structure stratifiée (1002) est disposée à l'intérieur du deuxième panneau (908) et sur la troisième surface (910) du deuxième panneau ;
l'entretoise (914) est disposée à l'extérieur du deuxième panneau (908) et sur la troisième surface (910) du deuxième panneau (908) en contact avec la structure stratifiée (1002) ; et
le revêtement à faible émissivité (918) est disposée près de l'entretoise (914).

6. Structure à double vitrage selon la revendication 1, dans laquelle :
la structure stratifiée (1002) est disposée à l'intérieur du deuxième panneau (908) et sur la troisième surface (910) du deuxième panneau ;
le revêtement à faible émissivité (918) est disposée à l'extérieur du deuxième panneau (908) et sur la troisième surface (910) du deuxième panneau en contact avec la structure stratifiée (1002) ; et
l'entretoise (914) est disposée près du revêtement à faible émissivité (918).

7. Structure à double vitrage selon la revendication 1, dans laquelle :
la structure stratifiée (1002) est disposée à l'intérieur du deuxième panneau (908) et sur la troisième surface (910) du deuxième panneau ;
le revêtement à faible émissivité (918) est disposée à l'extérieur du deuxième panneau (908) et sur la troisième surface (910) du deuxième panneau en contact avec la structure stratifiée (1002) ;
l'entretoise (914) est disposée près du revêtement à faible émissivité (918) ; et
un deuxième revêtement à faible émissivité (918) est disposé près de l'entretoise (914) et sur la deuxième surface (904) du premier panneau (902).

8. Structure à double vitrage selon la revendication 1, dans laquelle le film électrochromique (1004, 1300) comprend :
un premier film transparent électriquement conducteur (1306) ;
un deuxième film transparent électriquement conducteur (1310) ;
une couche de matériau électrochromique (1314) disposée entre le premier film transparent électriquement conducteur (1306) et le deuxième film transparent électriquement conducteur (1310) ;
une couche de stockage de charge (1318) disposée sur le deuxième film transparent électriquement conducteur (1310) ; et
une couche d'électrolyte (1322) disposée entre la couche de matériau électrochromique et la couche de stockage de charge.

9. Structure à double vitrage selon la revendication 8, dans laquelle la couche d'électrolyte (1322) comprend :
un sel électrolyte sélectionné parmi LiTFSI, LiPF6, LiBF4, LiClO4, LiCF3SO3, LiN(CF3SO2)2, LiSbFg, LiAsF6, LiN(CF3CF2SO2)2, (C2H5)4NBF4, (C2H5)3CH3NBF4, ou Lil ;
et
une matrice polymère.

10. Procédé de formation d'une structure à double vitrage, comprenant :
la formation d'un premier panneau présentant une première surface et une deuxième surface opposée à la première surface ;
la formation d'un deuxième panneau comprenant une troisième surface et une quatrième surface, la troisième surface du deuxième panneau faisant face à la deuxième surface du premier panneau ;
la disposition d'une structure stratifiée à l'intérieur du premier panneau sur la deuxième surface ou à l'intérieur du deuxième panneau sur la troisième surface, dans lequel la structure stratifiée comprend :
un film électrochromique ;
une première couche intermédiaire adhésive intercalée entre le film électrochromique et un premier substrat ; et
une deuxième couche intermédiaire adhésive intercalée entre le film électrochromique et un deuxième substrat ;
la disposition d'un revêtement à faible émissivité sur la deuxième surface du premier panneau ou la troisième surface du deuxième panneau ; et
la disposition d'une entretoise entre le premier panneau et le deuxième panneau.

11. Procédé selon la revendication 10, comprenant en outre :
la disposition d'une couche de matériau électrochromique entre le premier film transparent électriquement conducteur et le deuxième film transparent électriquement conducteur ;
la disposition d'une couche de stockage de charge sur le deuxième film transparent électriquement conducteur ; et
la disposition d'une couche d'électrolyte entre la couche de matériau électrochromique et la couche de stockage de charge.

12. Procédé selon la revendication 10, dans lequel la disposition de la structure stratifiée comprend :
la disposition de la structure stratifiée à l'intérieur du premier panneau et sur la deuxième surface du premier panneau ;
la disposition du revêtement à faible émissivité à l'extérieur du premier panneau et sur la deuxième surface du premier panneau en contact avec la structure stratifiée ; et
la disposition de l'entretoise près du revêtement à faible émissivité.

13. Procédé selon la revendication 10, dans lequel la disposition de la structure stratifiée comprend :
la disposition de la structure stratifiée à l'intérieur du premier panneau et sur la deuxième surface du premier panneau ;
la disposition de l'entretoise à l'extérieur du premier panneau et sur la deuxième surface du premier panneau en contact avec la structure stratifiée ; et
la disposition du revêtement à faible émissivité près de l'entretoise et sur la troisième surface du deuxième panneau.

14. Procédé selon la revendication 10, dans lequel la disposition de la structure stratifiée comprend :
la disposition de la structure stratifiée à l'intérieur du premier panneau et sur la deuxième surface du premier panneau ;
la disposition du revêtement à faible émissivité à l'extérieur du premier panneau et sur la deuxième surface du premier panneau en contact avec la structure stratifiée ; et
la disposition de l'entretoise près du revêtement à faible émissivité ; et
la disposition du deuxième revêtement à faible émissivité près de l'entretoise et sur la troisième surface du deuxième panneau.

15. Procédé selon la revendication 10, dans lequel la disposition de la structure stratifiée comprend :
la disposition de la structure stratifiée à l'intérieur du deuxième panneau et sur la troisième surface du deuxième panneau ;
la disposition de l'entretoise à l'extérieur du deuxième panneau et sur la troisième surface du deuxième panneau en contact avec la structure stratifiée ; et
la disposition du revêtement à faible émissivité près de l'entretoise.
